# EUROPÄISCHE PATENTSCHRIFT

(11) **EP 0 593 119 B1**
(45) Veröffentlichungstag und Bekanntmachung des Hinweises auf die Patenterteilung: **08.07.1998**
(21) Anmeldenummer: 93202834.3
(22) Anmeldetag: 06.10.1993
(51) Int. Cl.: G11B 15/61, G11B 5/53

(54) **Einrichtung mit einem elastisch aufweitbaren Klemmteil auf einer Welle festklemmbaren Bauteil, Klemmteil für eine solche Einrichtung und Aufweitvorrichtung zum Aufweiten eines solchen Klemmteils einer solchen Einrichtung**
Device for clamping an element on a shaft with an elastic expandable clamp, clamp for such a device and expanding device for expanding such a clamp of such a device
Dispositif de serrage d'un élément sur un arbre avec une pièce de serrage expansible élastiquement, pièce de serrage pour un tel dispositif, et dispositif pour l'expansion d'une telle pièce de serrage pour un tel dispositif

(30) Priorität: 14.10.1992 AT 2024/92
(43) Veröffentlichungstag der Anmeldung: 20.04.1994
(73) Patentinhaber: Philips Electronics N.V., 5621 BA Eindhoven (NL)
(72) Erfinder: Kocisek, Karl, NL-5656 AA Eindhoven (NL)
(74) Vertreter: Cuppens, Hubertus Martinus Maria

(56) Entgegenhaltungen:
- EP-A- 0 024 765
- EP-A- 0 034 381
- EP-A- 0 156 420
- EP-A- 0 366 322
- FR-A- 2 275 844
- PATENT ABSTRACTS OF JAPAN vol. 9, no. 64 (P-343) 23. März 1985 & JP-A-59 198 521 (HITACHI) 10. November 1984

## Beschreibung

Die Erfindung bezieht sich auf eine Einrichtung mit einer Welle und mit einem Bauteil, der eine Nabe aufweist, die auf der Welle sitzt und die mindestens einen koaxial zur Welle verlaufenden hülsenförmigen Ansatz aufweist, der in radialen Richtungen elastisch deformierbar ausgebildet ist und an dem zum Festklemmen an der Welle mindestens ein auf denselben aufsetzbarer, denselben ringartig umgebender, lösbarer Klemmteil angreift, der drei gleichmäßig um 120° zueinander winkelversetzt angeordnete, nach innen weisende Klemmstellen aufweist, von denen jede in radialer Richtung verstellbar ist.

Weiters bezieht sich die Erfindung auf einen Klemmteil für eine solche Einrichtung, der bezüglich einer Symmetrieachse ringartig ausgebildet ist und der drei gleichmäßig um 120° zueinander winkelversetzt angeordnete, nach innen weisende Klemmstellen aufweist, von denen jede in radialer Richtung verstellbar ist.

Weiters bezieht sich die Erfindung auf eine Aufweitvorrichtung zum Verstellen der Angriffsstellen eines solchen Klemmteiles einer solchen Einrichtung.

Eine Einrichtung gemaß der eingangs im ersten Absatz angeführten Gattung ist beispielsweise aus der AT 365.808 B bekannt, (Siehe auch EP-A-0 156 420). Bei dieser bekannten Einrichtung handelt es sich um ein Aufzeichnungs- und Wiedergabegerät für Bild- und Tonsignale, die auf einem Magnetband aufgezeichnet und von demselben wiedergegeben werden können. Hiefür weist das Gerät eine trommelförmige Abtasteinrichtung auf, um die das Magnetband in einer schraubenlinienförmigen Bahn teilweise herumgeschlungen wird und die einen mit einem Klemmteil an einer rotierend antreibbaren Welle festgeklemmten trommelförmigen Bauteil aufweist, der einen Kopfträger bildet, an dem Magnetköpfe zum Abtasten des Magnetbandes und zum Aufzeichnen und Wiedergeben von Bildsignalen befestigt sind. Hiebei ist der Klemmteil durch einen in radialen Richtungen im wesentlichen undeformierbaren flachen Ring gebildet, von dem drei Klemmlappen nach innen zu einem hülsenförmigen Ansatz einer Nabe des Kopfträgers hin abstehen, wobei die Klemmlappen gegenüber der Ebene des flachen Ringes abgewinkelt verlaufend ausgebildet sind und mit ihren freien Enden, die Klemmstellen bilden, auf einer Abstufung des hülsenförmigen Ansatzes aufliegen. Zum Verstellen der freien Enden der drei Klemmlappen in radialen Richtungen bezüglich des hülsenförmigen Ansatzes, um den hülsenförmigen Ansatz an der Welle festzuklemmen, ist bei der bekannten Einrichtung ein in axialer Richtung verschraubbarer Schraubring vorgesehen, der über einen Druckring auf den als Klemmteil vorgesehenen Ring einwirkt, wobei bei einer axialen Verstellung des Schraubringes, des Druckringes und des als Klemmteil vorgesehenen Ringes die Neigungslage der drei Klemmlappen verändert wird und auf diese Weise die freien Enden der drei Klemmlappen in radialen Richtungen verstellt werden. Bei dieser bekannten Einrichtung muß der Kopfträger beim Festklemmen des hülsenförmigen Ansatzes an der Welle sowohl in axialer Richtung als auch in tangentialer Richtung bezüglich der Welle festgehalten werden, so daß beim Festklemmen äußere Kräfte auf den Kopfträger ausgeübt werden, und zwar sowohl in axialer Richtung als auch in tangentialer Richtung. Aufgrund dieser äußeren Kräfte ist eine einwandfreie und exakte Klemmung mit einem möglichst geringen Axialschlag und mit einem möglichst geringen Radialschlag schwer erreichbar. Weiters treten bei dieser bekannten Ausbildung im Bereich zwischen dem Schraubring, dem Druckring und dem als Klemmteil vorgesehenen Ring und im Bereich zwischen den freien Enden der Klemmlappen und der Abstufung des hülsenförmigen Ansatzes undefinierte Reibungskräfte auf, die hinsichtlich der Erzielung von genau definierten, untereinander gleich großen und stets reproduzierbaren Klemmkräften zum Festklemmen des hülsenförmigen Ansatzes an der Welle nachteilig sind. Weiters treten bei der bekannten Ausbildung aufgrund der geneigten Lage der drei Klemmlappen zwischen den Klemmlappen und dem hülsenförmigen Ansatz Kraftkomponenten in axialer Richtung auf, durch die es über eine lange Lebensdauer zu einem unerwünschten Wandern des Kopfträgers in axialer Richtung entlang der Welle kommen kann. Bei der bekannten Ausbildung sind weiters nachteiligerweise relativ viele Bestandteile zum Festklemmen des hülsenförmigen Ansatzes an der Welle erforderlich und kann ein Festklemmvorgang nur relativ schwierig in einem mechanisierten Vorgang erfolgen.

Die Erfindung hat sich zur Aufgabe gestellt, die vorstehend angeführten Schwierigkeiten zu vermeiden und eine Einrichtung gemäß der im ersten Absatz angeführten Gattung in der Weise zu verbessern, daß beim Festklemmen eines hülsenförmigen Ansatzes der Nabe eines Bauteiles der Einrichtung an einer Welle praktisch überhaupt keine bzw. nur vernachlässigbar kleine äußere Kräfte auf den Bauteil ausgeübt werden, daß keine undefinierten Reibungskräfte auftreten, daß von den Klemmfortsätzen keine Kraftkomponenten in einer axialen Richtung auf den hülsenförmigen Ansatz ausgeübt werden, daß zum Festklemmen mit einer geringen Anzahl von Bestandteilen das Auslangen gefunden wird und daß das Festklemmen leicht in einem mechanisierten Vorgang erfolgen kann. Hiefür ist die Erfindung dadurch gekennzeichnet, daß der Klemmteil und seine drei Klemmstellen auf demselben senkrecht zur Welle verlaufenden Niveau liegen und daß der Klemmteil in radialen Richtungen elastisch deformierbar ausgebildet ist und zusätzlich drei ebenfalls gleichmäßig um 120° zueinander winkelversetzt angeordnete, je in radialer Richtung verstellbare Angriffsstellen für eine Aufweitvorrichtung aufweist, wobei je eine Angriffsstelle und mindestens eine Klemmstelle einander zugeordnet sind. Auf diese Weise ist erreicht, daß beim Festklemmen eines hülsenförmigen Ansatzes der Nabe eines Bauteiles an einer Welle der Bauteil zu seiner Positionierung beim Festklemmen nur mit sehr kleinen Kräften positioniert werden muß, aber nicht mit großen Kräften festgehalten werden muß, weil beim Festklemmen des hülsenförmigen Ansatzes an der Welle auf den Bauteil keine bzw. nur vernachlässigbar kleine Kräfte ausgeübt werden, sondern nur der ringartige Klemmteil mit Hilfe der Aufweitvorrichtung unter Aufbringung relativ großer Kräfte aufgeweitet werden muß, wobei die hiebei auftretenden Reaktionskräfte zur Gänze nur von der Aufweitvorrichtung aufgenommen werden. Somit werden auf den Bauteil praktisch überhaupt keine bzw. nur vernachlässigbar kleine äußere Kräfte ausgeübt, was im Hinblick auf die Erzielung einer einwandfreien und exakten Klemmung mit einem minimalen Axialschlag und mit einem minimalen Radialschlag vorteilhaft ist. Weiters ist hiebei durch das Aufweiten des ringartigen Klemmteiles bei einem Festklemmvorgang erreicht, daß der Klemmteil ohne mechanischen Kontakt zu dem hülsenförmigen Ansatz in seinen Klemmniveaubereich auf dem hülsenförmigen Ansatz bringbar ist und danach mit seinen Klemmfortsätzen exakt in radialen Richtungen zum hülsenförmigen Ansatz verstellbar ist, so daß keine undefinierten Reibungskräfte zwischen den freien Enden der Klemmfortsätze und dem hülsenförmigen Ansatz auftreten, so daß stets genau definierte, untereinander gleich große und stets reproduzierbare Klemmkräfte erreicht werden. Weiters ist hiebei durch die niveaugleiche Ausbildung des Klemmteiles und seiner Klemmfortsätze und die Verstellbarkeit der Klemmfortsätze exakt in radialen Richtungen erreicht, daß die Klemmkräfte nur exakt in radialen Richtungen wirken und keine Kraftkomponenten in axialen Richtungen auftreten, so daß der Bauteil auch über eine lange Lebensdauer keine Tendenz zum Wandern in axialer Richtung entlang der Welle aufweist. Weiters ist hiebei erreicht, daß zum Festklemmen eines hülsenförmigen Ansatzes an der Welle vorteilhafterweise nur ein einziger Klemmteil erforderlich ist und daß das Festklemmen mit diesem einen Klemmteil sehr leicht und einfach in einem mechanisierten Vorgang durchgeführt werden kann.

Als sehr vorteilhaft hat sich hiebei erwiesen, wenn die Nabe des Bauteiles einen im wesentlichen undeformierbaren Zentralbereich aufweist, von dem in entgegengesetzten Axialrichtungen zwei koaxial zur Welle verlaufende hülsenförmige Ansätze abstehen, an denen je ein Klemmteil angreift, und jeder der beiden Klemmteile drei gleichmäßig um 120° zueinander winkelversetzt angeordnete, auf demselben Niveau wie der Klemmteil liegende Klemmstellen und drei ebenfalls gleichmäßig um 120° zueinander winkelversetzt angeordnete Angriffsstellen für eine Aufweitvorrichtung aufweist. Hiedurch ist ein besonders exaktes und sicheres Festklemmen eines solchen Bauteiles an einer Welle erreicht.

In diesem Zusammenhang hat sich als besonders vorteilhaft erwiesen, wenn die beiden Klemmteile zur Aufbringung von unterschiedlich großen Klemmkräften ausgebildet sind. Auf diese Weise ist erreicht, daß im Bereich des stärkeren Klemmteiles ein Festlager realisiert ist und daher in diesem Bereich der Bauteil auf einem vorgegebenen axialen Niveau sicher fixiert ist und daß im Bereich des schwächeren Klemmteiles ein Gleitlager realisiert ist und daher in diesem Bereich eine exakte radiale Positionierung des Bauteiles erfolgt, dabei aber vorteilhafterweise eine Bewegungsmöglichkeit in axialer Richtung erhalten bleibt.

Als sehr vorteilhaft hat sich hiebei weiters erwiesen, wenn ein Klemmteil aus Federstahl und der andere Klemmteil aus Federbronze besteht. Auf diese Weise ist erreicht, daß die Klemmteile der Einrichtung aus handelsüblichen Materialien bestehen und daß mit formgleichen Klemmteilen infolge der unterschiedlichen Materialien auf einfache Weise unterschiedlich große Klemmkräfte erreicht werden.

Als sehr vorteilhaft hat sich weiters auch erwiesen, wenn der Bauteil drei gleichmäßig um 120° zueinander winkelversetzt angeordnete, den Bauteil in axialer Richtung durchsetzende Durchgänge aufweist und mit den drei Angriffsstellen eines Klemmteiles der Einrichtung drei Aufweitdorne einer Aufweitvorrichtung durch die drei Durchgänge hindurch in Wirkverbindung bringbar sind. Auf diese Weise ist erreicht, daß zum Festklemmen bzw. zum Lösen beider Klemmteile einer Einrichtung die hiefür erforderliche Aufweitvorrichtung von derselben Seite bezüglich des Bauteiles her mit beiden Klemmteilen in Wirkverbindung gebracht werden kann.

Ein Klemmteil gemäß der eingangs im zweiten Absatz angeführten Gattung ist beispielsweise auch aus der AT 365.808 B bekannt. Dieser bekannte Klemmteil ist durch einen in radialen Richtungen im wesentlichen undeformierbaren flachen Ring gebildet, von dem drei Klemmlappen nach innen abstehen, die gegenüber der Ebene des flachen Ringes abgewinkelt verlaufend ausgebildet sind und deren freien Enden Klemmstellen bilden. Bei der Herstellung dieses Klemmteiles erfordert das Abwinkeln der Klemmlappen einen zusätzlichen Aufwand, was nachteilig ist. Weiters ist die Neigungslage der Klemmlappen relativ stark toleranzabhängig, so daß die mit einem solchen Klemmteil aufbringbaren Klemmkräfte eine relativ große Streuung aufweisen und daher keine präzise, reproduzierbare Klemmung erreichbar ist.

Ein erfindungsgemäßer Klemmteil für eine Einrichtung gemäß der Erfindung ist dadurch gekennzeichnet, daß der Klemmteil und seine drei Klemmstellen auf demselben senkrecht zur Symmetrieachse verlaufenden Niveau liegen und daß der Klemmteil in radialen Richtungen elastisch deformierbar ausgebildet ist und zusätzlich drei ebenfalls gleichmäßig um 120° zueinander winkelversetzt angeordnete, je in radialer Richtung verstellbare Angriffsstellen für eine Aufweitvorrichtung aufweist, wobei je eine Angriffsstelle und mindestens eine Klemmstelle einander zugeordnet sind. Ein solcher Klemmteil ist auf besonders einfache Weise herstellbar, beispielsweise in einem einzigen Stanzvorgang aus einem Plattenmaterial, und kann eine sehr einfache Ausbildung aufweisen. Mit einem solchen Klemmteil sind die von ihm aufzubringenden Klemmkräfte exakt senkrecht zu seiner Symmetrieachse aufbringbar und weisen die Klemmkräfte stets dieselbe Größe auf, was im Hinblick auf die Erzielung einer präzisen, reproduzierbaren Klemmung vorteilhaft ist.

Bei einem solchen erfindungsgemäßen Klemmteil hat sich bezüglich der Anordnung einer Angriffsstelle und der ihr zugeordneten mindestens einen Klemmstelle als vorteilhaft erwiesen, wenn jeweils eine Angriffsstelle und eine ihr zugeordnete Klemmstelle auf einer Radiuslinie liegen, so daß jeweils eine Angriffsstelle und die ihr zugeordnete Klemmstelle gleichsinnig mit Hilfe einer Aufweitvorrichtung verstellbar sind. Auf diese Weise ist eine direkte Zuordnung von einer Angriffsstelle zu einer Klemmstelle erreicht.

Wenn eine Angriffsstelle und die ihr zugeordnete Klemmstelle auf einer Radiuslinie liegen, hat sich als vorteilhaft erwiesen, wenn der Klemmteil in seinen drei Bereichen mit je einer Angriffsstelle und der dieser Angriffsstelle zugeordneten Klemmstelle in radialen Richtungen im wesentlichen undeformierbar und in den zwischen diesen drei Bereichen liegenden Abschnitten in radialen Richtungen elastisch deformierbar ausgebildet ist. Dies ist im Hinblick auf eine möglichst gute elastische Verformbarkeit des Klemmteiles vorteilhaft.

Wenn eine Angriffsstelle und die ihr zugeordnete Klemmstelle auf einer Radiuslinie liegen, hat sich als besonders vorteilhaft erwiesen, wenn von jeder Angriffsstelle im Klemmteil ein in radialer Richtung verlaufender, den Klemmteil in axialer Richtung durchsetzender Schlitz bis zur äußeren Begrenzungswand des Klemmteiles führt. Dies ist im Hinblick auf eine möglichst große elastische Verformbarkeit des Klemmteiles besonders vorteilhaft.

Wenn eine Angriffsstelle und die ihr zugeordnete Klemmstelle auf einer Radiuslinie liegen, hat sich weiters als besonders vorteilhaft erwiesen, wenn jede Angriffsstelle durch die Begrenzungswand eines den Klemmteil in axialer Richtung durchsetzenden Loches gebildet ist. Dies ist hinsichtlich einer besonders einfachen Ausbildung der Angriffsstellen und eines möglichst gleichförmigen Aufweitens des Klemmteiles sowie eines besonders sicheren Zusammenwirkens einer Aufweitvorrichtung mit den Angriffsstellen vorteilhaft.

Bezüglich der Anordnung einer Angriffsstelle und der ihr zugeordneten mindestens einen Klemmstelle hat sich bei einem erfindungsgemäßen Klemmteil auch als vorteilhaft erwiesen, wenn jeweils eine Angriffsstelle und je eine von zwei ihr zugeordneten Klemmstellen auf zwei Radiuslinien liegen, die einen Winkel von 60° miteinander einschließen, wobei jeweils eine Angriffsstelle und die beiden ihr zugeordneten Klemmstellen gegensinnig mit Hilfe einer Aufweitvorrichtung verstellbar sind. Auf diese Weise ist erreicht, daß eine Angriffsstelle zwei gegenüber dieser Angriffsstelle je um 60° winkelversetzt angeordneten Klemmstellen zugeordnet ist und daß das Wegverstellen der Klemmstellen von einem hülsenförmigen Ansatz durch das Hinverstellen der Angriffsstellen zu dem hülsenförmigen Ansatz erreichbar ist.

Wenn eine Angriffsstelle und die beiden ihr zugeordneten Klemmstellen je auf einer von drei zueinander je um 60° winkelversetzten Radiuslinien liegen, hat sich als besonders vorteilhaft erwiesen, wenn der Klemmteil in seinen drei Bereichen mit je einer Klemmstelle in radialen Richtungen im wesentlichen undeformierbar ausgebildet ist und zwischen diesen drei Bereichen je einen in radialen Richtungen elastisch deformierbaren Abschnitt mit einer Doppelhöckerform aufweist, dessen beide Höcker von der Symmetrieachse des Klemmteiles weg weisen und dessen Mittenbereich zwischen den beiden Höckern zu der Symmetrieachse hin weist, und die äußere Begrenzungswand des Klemmteiles je im Mittenbereich zwischen den beiden Höckern des in radialen Richtungen elastisch deformierbaren Abschnittes eine Angriffsstelle für eine Aufweitvorrichtung bildet. Dies ist im Hinblick auf ein möglichst einfaches Angreifen und Zusammenwirken einer Aufweitvorrichtung mit den Angriffsstellen eines solchen Klemmteiles vorteilhaft.

Eine Aufweitvorrichtung zum Verstellen der Angriffsstellen eines erfindungsgemäßen Klemmteiles einer Einrichtung gemäß der Erfindung ist dadurch gekennzeichnet, daß die Aufweitvorrichtung drei bezüglich einer Symmetrieachse, die mit der Achse der Welle, auf der die Nabe des Bauteiles der Einrichtung sitzt, zum Fluchten bringbar ist, gleichmäßig um 120° zueinander winkelversetzt angeordnete Aufweitdorne und eine Verstelleinrichtung für die Aufweitdorne aufweist, mit der jeder der drei Aufweitdorne zumindest mit einem freien Ende, das zum Zusammenwirken mit einer Angriffsstelle eines Klemmteiles der Einrichtung vorgesehen ist, in einer radialen Richtung bezüglich der Symmetrieachse verstellbar ist. Mit einer solchen Aufweitvorrichtung ist ein erfindungsgemäßer Klemmteil einer erfindungsgemäßen Einrichtung auf einfache und sichere Weise aufweitbar, um den Klemmteil auf einen hülsenförmigen Ansatz aufzubringen oder von einem solchen Ansatz abzunehmen.

Hiebei hat sich als sehr vorteilhaft erwiesen, wenn jeder Aufweitdorn an einem Halter gehalten ist, der an einem Halterträger der Aufweitvorrichtung in einer radialen Richtung bezüglich der Symmtrieachse verstellbar gelagert ist. Dies ist im Hinblick auf ein sicheres Halten und Verstellen der Aufweitdorne der Aufweitvorrichtung vorteilhaft.

Hiebei hat sich weiters als sehr vorteilhaft erwiesen, wenn der Halterträger in Richtung der Symmetrieachse verstellbar geführt ist. Dies ist im Hinblick auf ein besonders einfaches Verstellen der Aufweitdorne in Relation zu einem auf einer Welle festzuklemmenden Bauteil vorteilhaft.

Hiebei hat sich weiters als sehr vorteilhaft erwiesen, wenn zwischen jedem am Halterträger verstellbar gelagerten Halter und einer gegenüber dem Halterträger in Richtung der Symmetrieachse verstellbaren Verstelleinrichtung der Aufweitvorrichtung eine Kulissensteuerung vorgesehen ist, über die bei einer Verstellung der Verstelleinrichtung in Richtung der Symmetrieachse die Halter und die daran gehaltenen Aufweitdorne mit zumindest deren freien Enden je in einer radialen Richtung bezüglich der Symmetrieachse verstellbar sind. Dies ist im Hinblick auf ein einfaches Verstellen der Aufweitdorne der Aufweitvorrichtung vorteilhaft.

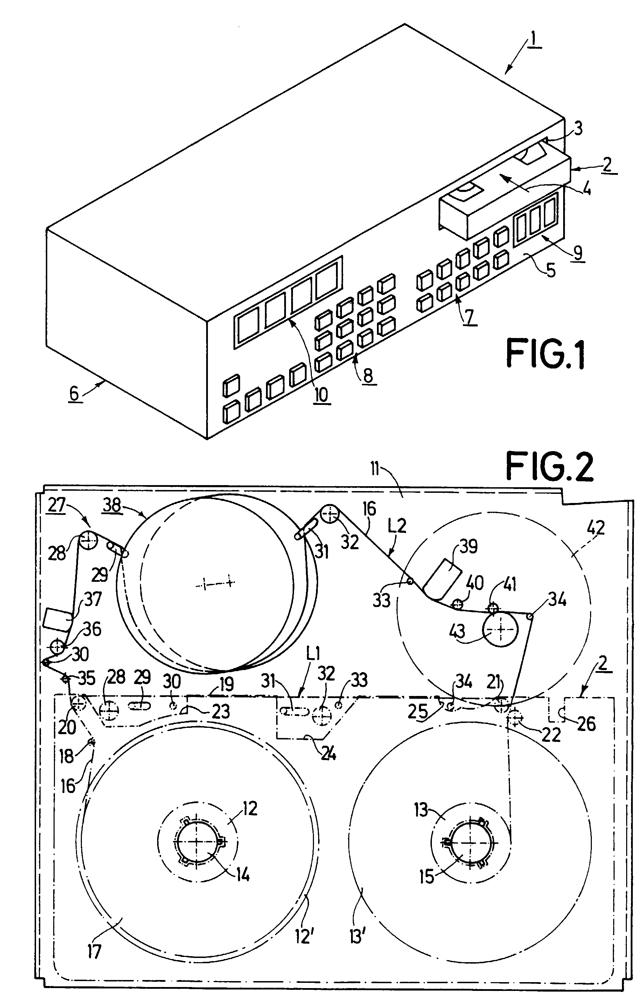

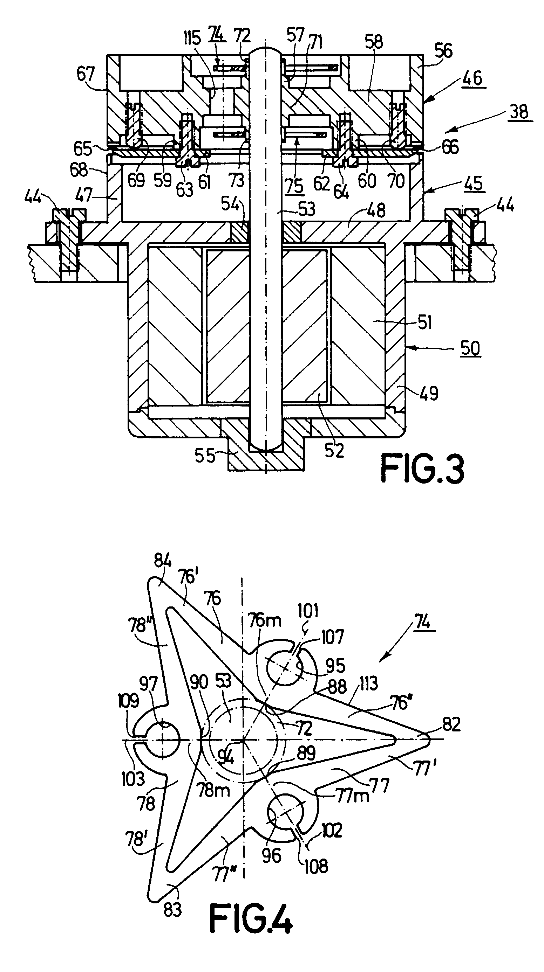

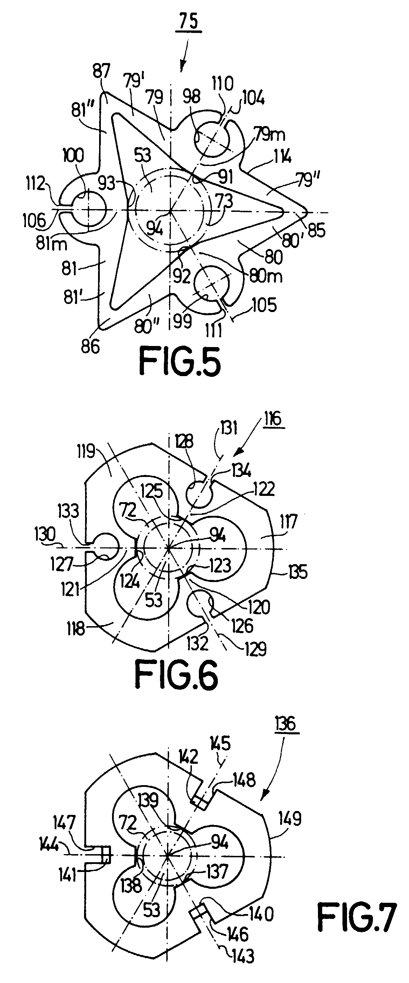

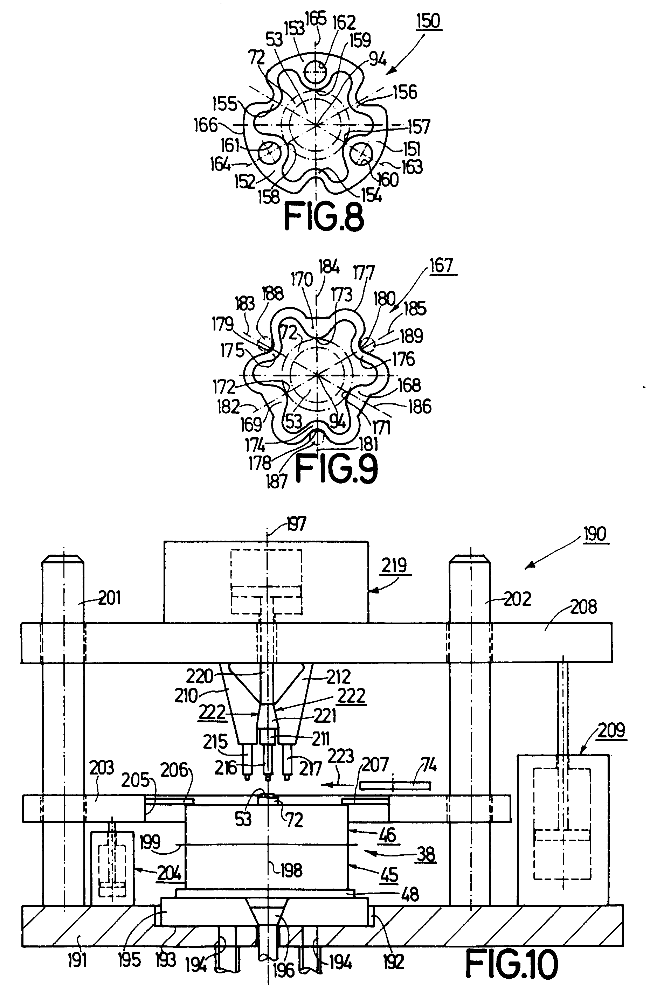

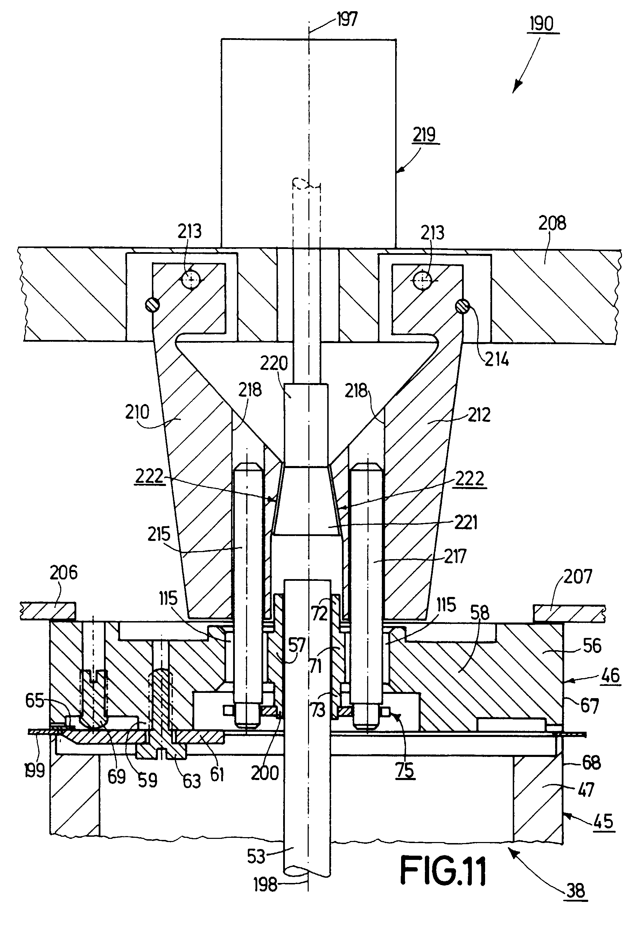

Die Erfindung wird im folgenden anhand von einigen in den Zeichnungen dargestellten Ausführungsbeispielen beschrieben, auf die die Erfindung jedoch nicht beschränkt sein soll. Die Fig. 1 zeigt in einem verkleinerten Maßstab schematisch in einer Schrägansicht ein Gerät zum Aufzeichnen und Wiedergeben von Fernsehsignalen und Tonsignalen, in das eine Kassette einsetzbar ist, die ein zwischen zwei Wickelkernen verlaufendes Magnetband enthält, auf dem Fernsehsignale mit Hilfe von rotierend antreibbaren Magnetköpfen in schrägen Spuren aufzeichenbar bzw. von demselben wiedergebbar sind. Die Fig. 2 zeigt ein im wesentlichen plattenförmiges Chassis des Gerätes gemäß Fig. 1, an dem eine trommelförmige Abtasteinrichtung, die die rotierend antreibbaren Magnetköpfe enthält, eine Bandfädeleinrichtung, mit der das Magnetband um die trommelförmige Abtasteinrichtung schlingbar ist, sowie weitere zum Zusammenwirken mit dem Magnetband dienende Bauteile angebracht sind. Die Fig. 3 zeigt in einem Querschnitt schematisch die trommelförmige Abtasteinrichtung des Gerätes gemäß den Figuren 1 und 2, die einen trommelförmigen Bauteil aufweist, der mittels zweier Klemmteile auf einer rotierend antreibbaren Welle festgeklemmt ist und an dem die rotierend antreibbaren Magnetköpfe angebracht sind. Die Fig. 4 zeigt in einem gegenüber Fig. 3 größeren Maßstab in Draufsicht den einen näher beim freien Ende der Welle angeordneten Klemmteil gemäß einer ersten Ausführungsvariante, mit dem der trommelförmige Bauteil der Abtasteinrichtung gemäß Fig. 3 an der Welle festgeklemmt ist. Die Fig. 5 zeigt analog wie die Fig. 4 den zweiten vom freien Ende der Welle weiter weg angeordneten Klemmteil, mit dem der trommelförmige Bauteil der Abtasteinrichtung gemäß Fig. 3 an der Welle festgeklemmt ist und der ebenfalls der ersten Ausführungsvariante entspricht. Die Fig. 6 zeigt auf analoge Weise wie die Figuren 4 und 5 einen Klemmteil gemäß einer zweiten Ausführungsvariante. Die Fig. 7 zeigt analog wie die Figuren 4 bis 6 einen Klemmteil gemäß einer dritten Ausführungsvariante. Die Fig. 8 zeigt analog wie die Figuren 4 bis 7 einen Klemmteil gemäß einer vierten Ausführungsvariante. Die Fig. 9 zeigt analog wie die Figuren 4 bis 8 einen Klemmteil gemäß einer fünften Ausführungsvariante. Die Fig. 10 zeigt schematisch in einer Seitenansicht und teilweise im Schnitt eine Aufweitvorrichtung zum Aufweiten eines erfindungsgemäßen Klemmteiles gemäß den Figuren 4, 5, 6, 7 und 8. Die Fig. 11 zeigt in einem gegenüber der Fig. 10 größeren Maßstab in einem Schnitt gemäß zwei einen Winkel von 120° miteinander einschließenden Schnittebenen ein Detail der Aufweitvorrichtung gemäß Fig. 10.

Die Fig. 1 zeigt ein Gerät 1, das zum Aufzeichnen und Wiedergeben von Fernsehsignalen und Tonsignalen auf einem Magnetband ausgebildet ist und das üblicherweise kurz als Videorecorder bezeichnet wird. Das Magnetband ist in einer in Fig. 1 schematisch dargestellten Kassette 2 untergebracht. Die Kassette 2 ist durch eine mit einem in das Geräteinnere hinein verschwenkbaren Deckel verschließbare Öffnung 3 hindurch in Richtung eines Pfeiles 4 in das Gerät 1 händisch einsetzbar. Die Öffnung 3 ist in einer Vorderwand 5 des Gehäuses 6 des Gerätes 1 vorgesehen. Beim Einsetzen der Kassette 2 in das Gerät 1 wird dieselbe in eine verstellbare Kassettenaufnahme eingeschoben, mit der die Kassette 2 nach ihrem vollständigen Einschieben in dieselbe längs eines Lförmigen Verstellweges zuerst parallel zu den Kassettenhauptwänden in das Gerät 1 eingezogen und danach senkrecht zu den Kassettenhauptwänden in eine Betriebslage im Gerät 1 abgesenkt wird. In dieser Betriebslage wird die Kassette 2 positioniert und es treten verstellbare Bandführungen einer Bandfädeleinrichtung in die Kassette 2 ein, mit der das Magnetband aus der Kassette 2 herausführbar ist, wobei das Magnetband mit geräteseitigen stationären Bandführungen, stationären Magnetköpfen und einer trommelförmigen, rotierend antreibbare Magnetköpfe enthaltenden Abtasteinrichtung in Wirkverbindung gebracht wird. Zum Einschalten von Betriebsarten des Gerätes weist das Gerät 1 an seiner Gehäusevorderwand 5 einen ersten Tastensatz 7 auf. Zum Programmieren des Gerätes 1 und zum Eingeben von weiteren Daten weist das Gerät 1 an seiner Gehäusevorderwand 5 einen zweiten Tastensatz 8 auf. Weiters weist das Gerät 1 an seiner Gehäusevorderwand 5 zwei Anzeigeeinrichtungen 9 und 10 auf, mit denen beispielsweise Zählwerksstände eines Bandzählwerkes und Uhrzeiten angezeigt werden können.

Die vorstehend erwähnten Bestandteile des Gerätes 1, wie die trommelförmige Abtasteinrichtung, die Bandfädeleinrichtung, die stationären Magnetköpfe und eine Vielzahl weiterer Bauteile des Gerätes 1 sind auf einem im wesentlichen plattenförmigen Chassis 11 des Gerätes 1 montiert. Dieses Chassis 11 ist in Fig. 2 schematisiert dargestellt, wobei von den von diesem Chassis 11 getragenen Bauteilen nur jene schematisch angedeutet sind, die im vorliegenden Zusammenhang wesentlich sind. Ein solches Chassis samt den darauf angebrachten Bauteilen ist in der europäischen Patentanmeldung mit der Anmeldenummer 92 202 452.2 geoffenbart, deren Offenbarung hiemit durch den Hinweis auf dieselbe als hier mitaufgenommen gilt (PHO 91-509, herewith incorporated by reference).

In Fig. 2 ist die in ihre Betriebslage abgesenkte Kassette 2 nur mit strichpunktierten Linien angedeutet. In der Kassette 2 sind zwei nebeneinanderliegende, rotierend antreibbare Wickelkerne 12 und 13 untergebracht, die beide je mit zwei kreisscheibenförmigen Flanschen 12' und 13' verbunden sind. Jeder der beiden Wickelkerne 12 und 13 ist mit einem am Chassis 11 drehbar gelagerten, rotierend antreibbaren Wickeldorn 14 bzw. 15 beim Absenken der Kassette in ihre Betriebslage in Antriebsverbindung bringbar. Nach dem Absenken einer Kassette 2 in ihre Betriebslage nimmt das in der Kassette 2 untergebrachte Magnetband 16 einen Ausgangsverlauf L1 ein, bei dem es von dem ersten Wickelkern 12 bzw. von dem auf diesen Wickelkern 12 aufgewickelten Bandwickel 17 über einen ersten kassettenseitigen Bandführungsstift 18 und eine im Bereich einer langen vorderen Kassettenschmalseite 19 angeordnete erste kassettenseitige Bandführungsrolle 20 entlang dieser vorderen Kassettenschmalseite 19 zu einer zweiten kassettenseitigen Bandführungsrolle 21 und von dieser über einen zweiten kassettenseitigen Bandführungsstift 22 zu dem zweiten Wickelkern 13 geführt ist. Die Kassette 2 weist im Bereich ihrer vorderen Kassettenschmalseite 19 einen schwenkbar mit ihr verbundenen Verschlußdeckel auf, der in Fig. 2 aber nicht dargestellt ist. Die Kassette 2 weist ferner in ihren beiden Hauptwänden vorgesehene, in die vordere Kassettenschmalseite 19 mündende Aussparungen 23, 24, 25 und 26 auf.

In den Aussparungen 23, 24 und 25 finden je in einer Ausfädelposition befindliche Bestandteile einer Bandfädeleinrichtung 27 Platz, die nach dem Absenken einer Kassette 2 in ihre in Fig. 2 dargestellte Betriebslage das in ihrem Ausgangsverlauf L1 befindliche Magnetband 16 hintergreifen. Die vorerwähnten Bestandteile der Bandfädeleinrichtung 27 sind eine erste Bandführungsrolle 28, ein erster Bandführungsstift 29, ein Bandspannungsfühlstift 30, ein zweiter Bandführungsstift 31, eine zweite Bandführungsrolle 32, ein dritter Bandführungsstift 33 und ein vierter Bandführungsstift 34. Die vorerwähnten Bestandteile der Bandfädeleinrichtung 27 sind je aus ihrer in Fig. 2 mit strichpunktierten Linien dargestellten Ausfädelposition in eine Einfädelposition verstellbar, wobei sie bei einer solchen Verstellung das Magnetband 16 mitnehmen, so daß das Magnetband 16 bei in ihren Einfädelpositionen befindlichen Bestandteilen der Bandfädeleinrichtung 27 in einem Betriebsverlauf L2 gehalten ist. In diesem Betriebsverlauf L2 verläuft das Magnetband 16 vom ersten Wickelkern 12 bzw. vom Bandwickel 17 über den Bandführungsstift 18 und die Bandführungsrolle 20 zu einem geräteseitigen Bandführungsstift 35 und von diesem über den Bandspannungsfühlstift 30 über eine weitere geräteseitige Bandführung 36 zu einem ersten stationären Magnetkopf 37. Von dem ersten Magnetkopf 37 verläuft das Magnetband 16 über die Bandführungsrolle 28 und den Bandführungsstift 29 zu einer trommelförmigen Abtasteinrichtung 38 und von dieser über den Bandführungsstift 31 und die Bandführungsrolle 32 und den Bandführungsstift 33 zu einem zweiten stationären Magnetkopf 39 des Gerätes 1. Von dem zweiten Magnetkopf 39 verläuft das Magnetband 16 über einen weiteren Bandführungsstift 40 zu einer Bandantriebswelle 41, mit der koaxial eine rotierend antreibbare Schwungscheibe 42 verbunden ist und an die eine Andruckrolle 43 andrückbar ist. Von der Bandantriebswelle 41 bzw. der Andruckrolle 43 verläuft das Magnetband 16 zu dem Bandführungsstift 34 und von diesem über die kassettenseitige Bandführungsrolle 21 und den Bandführungsstift 22 zum zweiten Wickelkern 13. Im Zuge dieses Betriebsverlaufes L2 verläuft das Magnetband 16 aufgrund einer Schrägstellung der Achsen der Bandführungsstifte 29 und 31 und der trommelförmigen Abtasteinrichtung 38 gegenüber der Ebene des Chassis 11 in einer schraubenlinienförmigen Bahn um die trommelförmige Abtasteinrichtung 38.

Die trommelförmige Abtasteinrichtung 38 besteht, wie dies aus Figur 3 ersichtlich ist, aus einem auf dem Chassis 11 mit Schrauben 44 befestigten stillstehenden Trommelteil 45 und aus einem zu diesem koaxial angeordneten, rotierend antreibbaren Trommelteil 46. Der stillstehende Trommelteil 45 weist hiebei einen hohlzylindrischen Mantel 47 und einen mit diesem verbundenen Bodenteil 48 auf, mit dem das Gehäuse 49 eines Motors 50 verbunden ist. Von dem Motor 50 sind schematisch der Stator 51 und der Rotor 52 dargestellt, der mit einer aus dem Motor 50 herausgeführten Welle 53 verbunden ist, die mit Hilfe von zwei Lagern 54 und 55 exakt drehbar gelagert ist. Der Motor 50 ist in Figur 3 nur schematisiert angedeutet. In der Praxis ist ein solcher Motor sehr häufig als beispielsweise dreiphasiger flacher kollektorloser Motor ausgebildet. Die Welle 53 ist mit ihrem aus dem Motor 50 herausgeführten Abschnitt durch den stillstehenden Trommelteil hindurchgeführt.

Der rotierend antreibbare Trommelteil 46 besteht im wesentlichen aus einem hohlzylindrischen Mantel 56 und aus einer Nabe 57 sowie aus einem im wesentlichen scheibenartigen Verbindungsbereich 58, über den die Nabe 57 mit dem Mantel 56 verbunden ist. Der Verbindungsbereich 58 weist zwei in Richtung zum stillstehenden Trommelteil 45 hin abstehende blockartige Fortsätze 59 und 60 auf, an denen je eine Kopfträgerplatte 61 bzw. 62 mittels einer Schraube 63 bzw. 64 festgeschraubt ist. An den freien Enden der beiden Kopfträgerplatten 61 und 62 ist je ein Magnetkopf 65 bzw. 66 befestigt, der mit seinem einen Arbeitsspalt aufweisenden freien Ende in den Bereich der Mantelflächen 67 und 68 des hohlzylindrischen Mantels 56 des rotierend antreibbaren Trommelteiles 46 und des hohlzylindrischen Mantels 47 des stillstehenden Trommelteiles 45 ragt. Mit jeder der beiden Kopfträgerplatten 61 und 62 wirkt eine im Verbindungsbereich 58 des rotierend antreibbaren Trommelteiles 46 abgestützte Justierschraube 69 bzw. 70 zusammen, mit denen die beiden Magnetköpfe 65 und 66 auf dasselbe senkrecht zur Welle 53 verlaufende Niveau bringbar sind. Bei in seinem Betriebsverlauf L2 befindlichem Magnetband 16 ist, wie bereits vorstehend erwähnt, das Magnetband 16 in einer schraubenlinienförmigen Bahn um die trommelförmige Abtasteinrichtung 38 herumgeführt, wobei das Magnetband 16 an den Mantelflächen 67 und 68 anliegt und dabei von den Magnetköpfen 65 und 66 entlang von nebeneinanderliegenden, schräg verlaufenden Spuren abtastbar ist.

Für ein einwandfreies Abtasten der Spuren auf einem Magnetband 16 ist es erforderlich, daß die Magnetköpfe 65 und 66 eine exakt definierte, möglichst toleranzunabhängige Position einnehmen. Hiefür ist es von großer Bedeutung, daß der rotierend antreibbare Trommelteil 46 auf besonders exakte und reproduzierbare Weise an der Welle 53 befestigbar ist. Um dies zu erreichen, wird der rotierend antreibbare Trommelteil 46 an der Welle 53 auf die nachfolgend beschriebene Art und Weise festgeklemmt.

Die Nabe 57 des rotierend antreibbaren Trommelteiles 46 weist einen im wesentlichen undeformierbaren Zentralbereich 71 auf, von dem in entgegengesetzten Axialrichtungen zwei koaxial zur Welle 53 verlaufende hülsenförmige Ansätze 72 und 73 abstehen. Die beiden hülsenförmigen Ansätze 72 und 73 sind in radialen Richtungen elastisch deformierbar ausgebildet. An jedem der beiden hülsenförmigen Ansätze 72 und 73 greift zum Festklemmen an der Welle 53 ein auf den betreffenden Ansatz 72 bzw. 73 aufsetzbarer, denselben ringartig umgebender, lösbarer Klemmteil 74 bzw. 75 an. Der eine näher beim freien Ende der Welle 53 angeordnete, auf dem Ansatz 72 sitzende Klemmteil 74 ist in Fig. 4 in Draufsicht im Detail dargestellt. Der andere vom freien Ende der Welle 53 weiter weg angeordnete, auf dem Ansatz 73 sitzende Klemmteil 75 ist in Fig. 5 in Draufsicht im Detail dargestellt. In den Figuren 4 und 5 sind die Welle 53 und der betreffenden Ansatz 72 bzw. 73 mit strichpunktierten Linien angedeutet.

Jeder der beiden Klemmteile 74 und 75 besteht aus drei leicht nach innen abgewinkelt verlaufenden Balken 76, 77, 78 bzw. 79, 80, 81, die in ihren Mittenbereichen 76m, 77m, 78m bzw. 79m, 80m, 81m im wesentlichen undeformierbar und in ihren von den Mittenbereichen seitlich abstehenden Schenkelbereichen 76', 76", 77', 77", 78', 78'' bzw. 79', 79", 80', 80", 81', 81'' elastisch deformierbar ausgebildet sind und die an ihren Enden über je einen Verbindungsbereich 82, 83, 84 bzw. 85, 86, 87 miteinander verbunden sind. In seinem Mittenbereich 76m, 77m, 78m bzw. 79m, 80m, 81m weist jeder Balken 76, 77, 78 bzw. 79, 80, 81 eine nach innen weisende Klemmstelle 88, 89, 90 bzw. 91, 92, 93 auf. Die Klemmstellen 88, 89, 90 und 91, 92, 93 sind hiebei gleichmäßig um 120° zueinander winkelversetzt angeordnet und jede derselben ist in radialer Richtung verstellbar.

Wie insbesondere aus Fig. 3, aber auch aus den Figuren 4 und 5 ersichtlich ist, liegen jeder Klemmteil 74 bzw. 75 und seine drei Klemmstellen 88, 89, 90 bzw. 91, 92, 93 auf demselben senkrecht zu einer Symmetrieachse 94 des Klemmteile 74 bzw. 75 und folglich senkrecht zur Welle 53 bzw. zum betreffenden hülsenförmigen Ansatz 72 bzw. 73 verlaufenden Niveau. Weiters ist jeder der beiden Klemmteile 74 und 75 aufgrund der elastischen Deformierbarkeit der Schenkelbereiche 76', 76", 77', 77", 78', 78'' bzw. 79', 79", 80', 80", 81', 81'' der Balken 76, 77, 78 bzw. 79, 80, 81 in radialen Richtungen elastisch deformierbar ausgebildet. Hiebei sind bei den beiden Klemmteilen 74 und 75 die Balken 76, 77, 78 bzw. 79, 80, 81, aus denen die Klemmteile 74 und 75 im wesentlichen bestehen, derart ausgebildet, daß ihre Schenkelbereiche 76', 76", 77', 77", 78', 78'' bzw. 79', 79", 80', 80", 81', 81'' eine möglichst gleichbleibende Biegesteifigkeit über ihre Länge aufweisen. Weiters weist jeder der beiden Klemmteile 74 und 75 drei ebenfalls gleichmäßig um 120° zueinander winkelversetzt angeordnete, je in radialer Richtung verstellbare Angriffsstellen 95, 96, 97 bzw. 98, 99, 100 für eine Aufweitvorrichtung auf, wobei je eine Angriffsstelle 95, 96, 97 bzw. 98, 99, 100 und eine Klemmstelle 88, 89, 90 bzw. 91, 92, 93 einander zugeordnet sind.

Wie aus den Figuren 4 und 5 ersichtlich ist, liegen hiebei jeweils eine Angriffsstelle 95, 96 97, bzw. 98, 99, 100 und eine ihr zugeordnete Klemmstelle 88, 89, 90 bzw. 91, 92, 93 auf einer Radiuslinie 101, 102, 103 bzw. 104, 105, 106, so daß jeweils eine Angriffsstelle und die ihr zugeordnete Klemmstelle vorteilhafterweise gleichsinnig mit Hilfe einer Aufweitvorrichtung verstellbar sind. Bei den beiden in den Figuren 4 und 5 dargestellten Klemmteilen 74 und 75 ist aufgrund der vorstehend erwähnten Ausbildung der Balken 76, 77, 78 und 79, 80, 81 jeder der beiden Klemmteile 74 und 75 in seinen drei Bereichen mit je einer Angriffsstelle 95, 96, 97 bzw. 98, 99, 100 und der dieser Angriffsstelle zugeordneten Klemmstelle 88, 89, 90 bzw. 91, 92, 93 in radialen Richtungen im wesentlichen undeformierbar und in den zwischen diesen Bereichen liegenden Abschnitten, die sich aus den Schenkelbereichen 76', 76", 77', 77", 78', 78'' bzw. 79', 79", 80', 80", 81', 81'' und aus den Verbindungsbereichen 82, 83, 84 bzw. 85, 86, 87 zusammensetzen, in radialen Richtungen elastisch deformierbar ausgebildet, was hinsichtlich einer guten Klemmfunktion und einer guten elastischen Verformbarkeit von Vorteil ist.

Bei den beiden Klemmteilen 74 und 75 führt von jeder Angriffsstelle 95, 96, 97 bzw. 98, 99, 100 im Klemmteil 74 bzw. 75 ein in radialer Richtung verlaufender, den Klemmteil 74 bzw. 75 in axialer Richtung durchsetzender Schlitz 107, 108, 109 bzw. 110, 111, 112 bis zur äußeren Begrenzungswand 113 bzw. 114 des Klemmteiles 74 bzw. 75, wodurch eine große elastische Verformbarkeit erreicht wird. Solche Klemmteile können auch ohne Schlitze zwischen den Angriffsstellen und der Außenwand ausgebildet sein, wodurch in den Bereichen mit einer Angriffsstelle und einer Klemmstelle eine höhere Festigkeit erzielt und eine einfachere Herstellbarkeit der Klemmteile erreicht wird.

Wie weiters aus den Figuren 4 und 5 ersichtlich ist, ist jede Angriffsstelle 95, 96, 97 bzw. 98, 99, 100 durch die Begrenzungswand eines den Klemmteil 74 bzw. 75 in axialer Richtung durchsetzenden Loches gebildet. Dies stellt eine einfache Ausbildung dar und ist hinsichtlich eines sicheren Zusammenwirkens mit einer Aufweitvorrichtung vorteilhaft.

Die beiden Klemmteile 74 und 75 sind weiters zur Aufbringung von unterschiedlich großen Klemmkräften ausgebildet. Dies ist im vorliegenden Fall dadurch realisiert, daß die beiden Klemmteile 74 und 75 aus demselben Material bestehen, nämlich vorzugsweise aus Federstahl oder auch aus Federbronze, und in axialer Richtung dieselbe Materialstärke aufweisen, daß die beiden Klemmteile 74 und 75 jedoch unterschiedliche geometrische Form aufweisen, nämlich dahingehend, daß die Länge und Breite der beiden Schenkelbereiche 76', 76", 77', 77", 78', 78'' und 79', 79", 80', 80'', 81', 81'' der Balken 76,77, 78 bzw. 79, 80, 81 unterschiedlich groß gewählt sind.

Bei Untersuchungen, die im vorliegenden Zusammenhang durchgeführt wurden, wurden die in den Figuren 4 und 5 dargestellten Klemmteile so ausgebildet, daß ihre Klemmstellen 88, 89, 90 bzw. 91, 92, 93 im nichtmontierten Ruhezustand der Klemmteile 74 und 75 einen Inkreis mit einem Durchmesser von etwa 7,7 mm eingeschlossen haben. Diese Klemmteile 74 und 75 wurden auf hülsenförmige Ansätze 72 und 73 mit einem Außendurchmesser von etwa 8 mm und einer Wandstärke von etwa 1 mm aufgebracht, wobei die beiden Klemmteile 74 und 75 von einer Aufweitvorrichtung über die hiefür vorgesehenen Angriffsstellen 95, 96, 97 bzw. 98, 99, 100 entsprechend aufgeweitet wurden. Hiebei konnten mit einem Klemmteil 74 einer Ausbildung gemäß Fig. 4 Klemmkräfte an jeder Klemmstelle von größer 400 N erzielt werden. Mit einem Klemmteil 75 gemäß Fig. 5 konnten Klemmkräfte an jeder Klemmstelle von etwa 200 N erzielt werden.

Unterschiedliche Klemmkräfte können aber nicht nur durch unterschiedliche Formgebung von zwei Klemmteilen erzielt werden, sondern auch noch auf andere Art und Weise. Und zwar vorzugsweise auch dadurch, daß die beiden Klemmteile in Draufsicht die gleiche Form aufweisen, jedoch dabei einfach aus unterschiedlichen Materialien bestehen, beispielsweise ein Klemmteil aus Federstahl und der andere Klemmteil aus Federbronze, wobei dann mit dem aus Federstahl bestehenden Klemmteil größere Klemmkräfte erzielt werden. Weiters können unterschiedliche Klemmkräfte auch dadurch erzielt werden, daß zwei Klemmteile in Draufsicht die gleiche Form aufweisen und aus dem gleichen Material bestehen, daß aber die Klemmteile in axialer Richtung unterschiedliche Materialstärken aufweisen.

Auf das Aufsetzen der beiden Klemmteile 74 und 75 auf die hülsenförmigen Ansätze 72 und 73 der trommelförmigen Abtasteinrichtung 38 gemäß Fig. 3 wird im Detail noch anhand der Figuren 10 und 11 näher eingegangen. Bereits jetzt ist aber noch zu erwähnen, daß der Klemmteil 75 auf einen abgestuften Abschnitt des Ansatzes 73 vormontiert wird und daß erst danach der rotierend antreibbare Trommelteil 46 auf die Welle 53 aufgeschoben wird, wobei von dem Klemmteil 75 selbstverständlich noch keine Klemmwirkung auf den Ansatz 73 ausgeübt wird. Um danach den vormontierten Klemmteil 75 mit Hilfe einer Aufweitvorrichtung aufweiten und vom abgestuften Abschnitt des Ansatzes 73 auf den Ansatz 73 selber bringen zu können, sind im Verbindungsbereich 58 des rotierend antreibbaren Trommelteiles 46 drei gleichmäßig um 120° zueinander winkelversetzt angeordnete, den Verbindungsbereich 58 des Trommelteiles 46 in axialer Richtung durchsetzende Durchgänge 115 vorgesehen. Mit den drei Angriffsstellen 98, 99 und 100 des Klemmteiles 75 sind drei Aufweitdorne einer Aufweitvorrichtung durch die drei Durchgänge 115 hindurch in Wirkverbindung bringbar, wie nachfolgend anhand der Fig. 11 beschrieben ist. Von den drei Durchgängen 115 ist in Fig. 3 nur einer dieser Durchgänge in Folge der Schnittdarstellung sichtbar.

Die Fig. 6 zeigt einen Klemmteil 116 gemäß einer zweiten Ausführungsvariante. Der Klemmteil 116 besteht aus drei im wesentlichen omegaförmig ausgebildeten Bereichen 117, 118, 119, die in Verbindungsbereichen 120, 121, 122 miteinander verbunden sind. Im Bereich dieser Verbindungsbereiche 120, 121, 122 ist der Klemmteil 116 in radialen Richtungen im wesentlichen undeformierbar und in den zwischen diesen drei Verbindungsbereichen 120, 121, 122 liegenden omegaförmigen Bereichen 117, 118, 119 des Klemmteiles 116 ist derselbe in radialen Richtungen elastisch deformierbar ausgebildet. In jedem der drei Verbindungsbereiche 120, 121, 122 weist der Klemmteil 116 eine nach innen weisende Klemmstelle 123, 124, 125 auf. Die drei Klemmstellen 123, 124, 125 sind hiebei gleichmäßig um 120° zueinander winkelversetzt angeordnet und jede derselben ist in radialer Richtung verstellbar.

Auch bei dieser Ausführungsvariante gemäß Fig. 6 liegen der Klemmteil 115 und seine drei Klemmstellen 123, 124, 125 auf demselben senkrecht zur Symmetrieachse 94 des Klemmteiles 116 und damit senkrecht zu einer Welle 53 bzw. zu einem hülsenförmigen Ansatz 72, die in Fig. 6 mit strichpunktierten Linien angedeutet sind, verlaufenden Niveau. Weiters ist der Klemmteil 116 in radialen Richtungen elastisch deformierbar ausgebildet und zusätzlich weist der Klemmteil 116 drei ebenfalls gleichmäßig um 120° zueinander winkelversetzt angeordnete, je in radialer Richtung verstellbare Angriffsstellen 126, 127, 128 für eine Aufweitvorrichtung auf, wobei je eine Angriffsstelle 126, 127, 128 und eine Klemmstelle 123, 124, 125 einander zugeordnet sind. Hiebei liegen jeweils eine Angriffsstelle 126, 127, 128 und eine ihr zugeordnete Klemmstelle 123, 124, 125 auf einer Radiuslinie 129, 130, 131, so daß jeweils eine Angriffsstelle und die ihr zugeordnete Klemmstelle vorteilhafterweise gleichsinnig mit Hilfe einer Aufweitvorrichtung verstellbar sind. Auch bei dem Klemmteil 116 führt von jeder Angriffsstelle 126, 127, 128, die hiebei durch die Begrenzungswand eines den Klemmteil 116 in axialer Richtung durchsetzenden Loches gebildet ist, ein in radialer Richtung verlaufender, den Klemmteil 116 in axialer Richtung durchsetzender Schlitz 132, 133, 134 bis zur äußeren Begrenzungswand 135 des Klemmteiles 116.

Die Fig. 7 zeigt einen Klemmteil 136 gemäß einer dritten Ausführungsvariante, der eine der Form des Klemmteiles 116 gemäß Fig. 6 sehr ähnliche Form aufweist. Auch der Klemmteil 136 weist drei gleichmäßig um 120° zueinander winkelversetzt angeordnete, nach innen weisende Klemmstellen 137, 138, 139 auf, die auf demselben senkrecht zur Symmetrieachse 94 des Klemmteiles 136 verlaufenden Niveau wie der Klemmteil 136 selber liegen. Der Klemmteil 136, der ebenso wie die zuvor beschriebenen Klemmteile 74, 75 und 116 gemäß den Figuren 4, 5 und 6 in radialen Richtungen elastisch deformierbar ausgebildet ist, weist ebenfalls zusätzlich drei gleichmäßig um 120° zueinander winkelversetzt angeordnete, je in radialer Richtung verstellbare Angriffsstellen 140, 141, 142 für eine Aufweitvorrichtung auf, wobei wiederum je eine Angriffsstelle 140, 141, 142 und eine Klemmstelle 137, 138, 139 einander zugeordnet sind und hiebei auf je einer Radiuslinie 143, 144, 145 liegen, so daß jede Angriffsstelle und die ihr zugeordnete Klemmstelle gleichsinnig mit Hilfe einer Aufweitvorrichtung verstellbar sind.

Bei der Ausführungsvariante gemäß Fig. 7 sind die Angriffsstellen 140, 141, 142 des Klemmteiles 136 für eine Aufweitvorrichtung je durch eine Wand eines aus der Ebene des Klemmteiles 136 senkrecht abgewinkelten Lappens gebildet. Von jedem dieser Lappen 140, 141, 142 führt bei dem Klemmteil 136 ein in radialer Richtung verlaufender, den Klemmteil 136 in axialer Richtung durchsetzender Schlitz 146, 147, 148 bis zur äußeren Begrenzungswand 149 des Klemmteiles 136.

Die Fig. 8 zeigt einen Klemmteil 150 gemäß einer vierten Ausführungsvariante. Dieser Klemmteil 150 weist drei im wesentlichen in radialen Richtungen undeformierbare bogenartige Bereiche 151, 152, 153 auf, die je über einen in radialen Richtungen elastisch deformierbaren, im wesentlichen U-förmig ausgebildeten Verbindungsbereich 154, 155, 156 miteinander verbunden sind. Jeder der bogenartigen Bereiche 151, 152, 153 weist einen nach innen weisenden, abgerundet ausgebildeten Abschnitt auf, dessen freies Ende 157, 158, 159 eine Klemmstelle des Klemmteiles 150 bildet, wobei die drei Klemmstellen 157, 158, 159 um 120° zueinander winkelversetzt angeordnet sind und auf demselben senkrecht zur Symmetrieachse 94 des Klemmteiles 150 verlauf enden Niveau wie der Klemmteil 150 selber liegen. Jeder Klemmstelle 157, 158, 159 ist eine auch in diesem Fall durch die Begrenzungswand eines Loches gebildete Angriffsstelle 160, 161, 162 für eine Aufweitvorrichtung zugeordnet. Hiebei liegen wieder jeweils eine Angriffsstelle 160, 161, 162 und eine ihr zugeordnete Klemmstelle 157, 158, 159 auf einer Radiuslinie 163, 164, 165, so daß jeweils eine Angriffsstelle und die ihr zugeordnete Klemmstelle gleichsinning mit Hilfe einer Aufweitvorrichtung verstellbar sind. Bei dem Klemmteil 150 gemäß Fig. 8 sind keine von den als Angriffsstellen vorgesehenen Löchern bis zur äußeren Begrenzungswand 166 des Klemmteiles 150 führende Schlitze vorgesehen.

Die Fig. 9 zeigt einen Klemmteil 167 gemäß einer fünften Ausführungsvariante. Der Klemmteil 167 weist drei in radialen Richtungen undeformierbare kuppenartige Bereiche 168, 169, 1 70 auf, deren nach innen weisende, abgerundet ausgebildete freie Enden je eine Klemmstelle 171, 172, 173 des Klemmteiles 167 bilden, die um 120° zueinander winkelversetzt angeordnet sind. Zwischen den drei kuppenartigen Bereichen 168, 169, 170 weist der Klemmteil 167 je einen in radialen Richtungen elastisch deformierbaren Abschnitt 174, 175, 176 auf. Jeder dieser Abschnitte 174, 175, 176 weist eine Doppelhöckerform auf, dessen beide Höcker von der Symmetrieachse 94 des Klemmteiles 167 weg weisen und dessen Mittenbereich zwischen den beiden Höckern zu der Symmetrieachse 94 hin weist. Die äußere Begrenzungswand 177 des Klemmteiles 167 bildet je im Mittenbereich zwischen den beiden Höckern des in radialen Richtungen elastisch deformierbaren Abschnittes 174, 175, 176 eine Angriffsstelle 178, 179, 180 für eine Aufweitvorrichtung zum Aufweiten des Klemmteiles 167.

Bei dem Klemmteil 167 liegen jeweils eine Angriffsstelle 178, 179, 180 und je eine von zwei ihr zugeordneten Klemmstellen 171, 172, 173 auf zwei Radiuslinien 181, 182, 183, 184, 185, 186, die einen Winkel von 60° miteinander einschließen, wobei jeweils eine Angriffsstelle und die beiden ihr zugeordneten Klemmstellen gegensinnig mit Hilfe einer Aufweitvorrichtung verstellbar sind. In Fig. 9 sind die Aufweitdorne 187, 188, 189 einer solchen Aufweitvorrichtung mit strichpunktierten Linien angedeutet. Zum Aufweiten des Klemmteiles 167 werden die Aufweitdorne 187, 188, 189 in Richtung zur Symmetrieachse 94 des Klemmteiles 167 hin verstellt.

Die Figuren 10 und 11 zeigen eine Aufweitvorrichtung 190 zum Aufweiten eines Klemmteiles entsprechend einer der in den Figuren 4 bis 8 dargestellten Ausführungsvarianten. Die Aufweitvorrichtung 190 weist einen Tisch 191 auf, der mit einer Aufnahmewanne 192 versehen ist. Zur Bodenwand 193 der Aufnahmewanne 192 führen Kanäle 194, durch die ein Luftstrom in die Aufnahmewanne 192 führbar ist. In die Aufnahmewanne 192 ist ein Träger 195 einsetzbar, der mit Hilfe eines senkrecht zur Bodenwand 193 verstellbaren Zentrierstempels 196 bezüglich einer Symmetrieachse 197 genau zentrierbar ist und durch entsprechende Verstellung des Zentrierstempels 196 gegen die Bodenwand 193 drückbar ist. Der Träger 195 ist zum Aufnehmen und Festhalten einer trommelförmigen Abtasteinrichtung 38 vorgesehen und ausgebildet, wobei die trommelförmige Abtasteinrichtung 38 mit Hilfe des Trägers 195 derart positionierbar ist, daß die Achse 198 der Welle 53 der Abtasteinrichtung 38 mit der Symmetrieachse 197 der Aufweitvorrichtung 190 zusammenfällt. Die trommelförmige Abtasteinrichtung 38 wird zum Festklemmen des rotierend antreibbaren Trommelteiles 46 an der Welle 53 der Abtasteinrichtung 38 in den Träger 195 eingesetzt, der dann in die Aufnahmewanne 192 im Tisch 191 eingesetzt wird. Dabei ist zwischen den stationären Trommelteil 45 und den rotierend antreibbaren Trommelteil 46 ein folienartiger, beispielsweise eine Dicke von 150 µm aufweisender Abstandshalter 199 eingefügt, der den rotierend antreibbaren Trommelteil 46 in einem genau festgelegten Axialabstand vom stationären Trommelteil 45 hält. Als Abstandshalter können beispielsweise zwei halbringförmige Folien vorgesehen sein, die im Bereich der Magnetköpfe 65 und 66 Freistellungen aufweisen, oder auch drei folienartige Streifen, die um 120° zueinander winkelversetzt in den Spaltbereich zwischen dem rotierend antreibbaren Trommelteil 46 und dem stationären Trommelteil 45 in radialer Richtung eingeschoben sind.

Wie bereits vorstehend erwähnt und aus Fig. 11 ersichtlich ist, wird bei einer solchen Abtasteinrichtung 38 der näher zum stationären Trommelteil 45 liegende Klemmteil 75 auf einen abgestuften Abschnitt 200 des hülsenförmigen Ansatzes 73 mit kleinerem Durchmesser vormontiert und danach der rotierend antreibbare Trommelteil 46 auf die Welle 53 aufgesetzt, wobei der Klemmteil 75 aber keine Klemmwirkung zum Festklemmen des hülsenförmigen Ansatzes 73 an der Welle 53 ausübt.

Von dem Tisch 191 der Aufweitvorrichtung 190 stehen zwei Säulen 201 und 202 senkrecht ab. Mit diesen beiden Säulen ist eine erste Bühne 203 in Richtung der Symmetrieachse 197 verstellbar geführt. Die erste Bühne 203 ist mit Hilfe einer schematisch angedeuteten ersten pneumatischen Verstelleinrichtung 204 auf und ab verstellbar. Die erste aühne 203 ist mit einem Durchgang 205 versehen, in den zwei mit der ersten Bühne 203 verbundene Niederhalter 206 und 207 in radialer Richtung bezüglich der Symmetrieachse 197 ragen. Die Niederhalter 206 und 207 sind zum Zusammenwirken mit dem Mantel 56 des rotierend antreibbaren Trommelteiles 46 in dessen axlalem Endbereich ausgebildet, um den rotierend antreibbaren Trommelteil 46 gegen den Abstandshalter 199 und den stationären Trommelteil 45 niederhalten zu können.

Die Aufweitvorrichtung 190 weist weiters eine mit Hilfe der Säulen 201 und 202 in Richtung der Symmetrieachse 197 verstellbar geführte zweite Bühne 208 auf, die mit Hilfe einer zweiten pneumatischen Verstelleinrichtung 209 verstellbar ist. Die zweite Bühne 208 bildet einen Halterträger, an dem drei gleichmäßig um 120° zueinander winkelversetzt angeordnete Halter 210, 211 und 212 je in einer radialen Richtung bezüglich der Symmetrieachse 197 verstellbar gelagert sind. Im vorliegenden Fall sind die Halter 210, 211 und 212 je um eine Schwenkachse 213 an dem Halterträger 208 verschwenkbar gelagert. Weiters greift an den drei Haltern 210, 211 und 212 eine Ringfeder 214 an, die danach trachtet, die Halter 210, 211 und 212 mit ihren vom Halterträger 208 abgewandten freien Enden aufeinanderzu zu bewegen. In jedem der drei Halter 210, 211 und 212 ist ein Aufweitdorn 215, 216 bzw. 217 gehalten. Hiebei ist jeder Aufweitdorn in eine Bohrung 218 im betreffenden Halter eingeführt und darin beispielsweise festgeklebt. Die drei Aufweitdorne 215, 216 und 217 sind bezüglich der Symmetrieachse 197, die mit der Achse 198 der Welle 53, auf der die Nabe 57 des rotierend antreibbaren Trommelteiles 46 sitzt, zum Fluchten bringbar ist, gleichmäßig um 120° zueinander winkelversetzt angeordnet.

Die Aufweitvorrichtung 190 weist weiters eine dritte pneu-matische Verstelleinrichtung 219 auf, die zum Verstellen der Aufweitdorne 215, 216 und 217 vorgesehen ist. Die pneumatische Verstelleinrichtung 219 weist hiebei einen zylindrischen Kolben 220 auf, der an seinem freien Ende in einen gegenüber dem zylindrischen Kolben 220 sich stetig erweiternden kegelstumpfförmigen Abschnitt 221 übergeht. Der Abschnitt 221 bildet die eigentliche Verstelleinrichtung für die Aufweitdorne 215, 216 und 217, mit der jeder der drei Aufweitdorne zumindest mit seinem freien Ende, das zum Zusammenwirken mit einer Angriffsstelle eines Klemmteiles vorgesehen ist, in einer radialen Richtung bezüglich der Symmetrieachse 197 verstellbar ist. Hiefür ist zwischen jedem an der zweiten Bühne 208 verstellbar gelagerten Halter 210, 211 bzw. 212 und dem gegenüber der zweiten Bühne 208 mit Hilfe der dritten pneumatischen Verstelleinrichtung 219 in Richtung der Symmetrieachse 197 verstellbaren kegelstumpfförmigen Abschnitt 221 der Aufweitvorrichtung 190 eine Kulissensteuerung 222 vorgesehen, über die bei einer Verstellung des Abschnittes 221 in Richtung der Symmetrieachse 197 die Halter 210, 211 und 212 und die daran gehaltenen Aufweitdorne 215, 216 und 217 mit zumindest ihren freien Enden je in einer radialen Richtung bezüglich der Symmetrieachse 197 verstellbar sind.

Zum Festklemmen des rotierend antreibbaren Trommelteiles 46 an der Welle 53 werden im wesentlichen folgende Vorgänge durchgeführt. Zuerst wird außerhalb der Aufweitvorrichtung 190 eine trommelförmige Abtasteinrichtung 38 in einen Träger 195 eingesetzt, wonach der Träger 195 samt der darin befindlichen Abtasteinrichtung 38 in die Aufnahmewanne 192 im Tisch 191 eingebracht wird und darin mit dem Zentrierstempel 196 positioniert und festgehalten wird. Hiebei befindet sich zwischen dem rotierend antreibbaren Trommelteil 46 und dem stationären Trommelteil 45 der Abstandshalter 199 und ist der näher beim stationären Trommelteil 45 liegende Klemmteil 75 auf der Abstufung 200 des hülsenförmigen Ansatzes 73 vormontiert.

Danach wird die erste Bühne 203 zur Abtasteinrichtung 38 abgesenkt, wobei die Niederhalter 206 und 207 gegen den rotierend antreibbaren Trommelteil 46 stoßen und diesen gegen den Abstandshalter 199 und den stationären Trommelteil 45 niederhalten. In weiterer Folge wird mit Hilfe der zweiten Verstelleinrichtung 209 die zweite Bühne 208 zur Abtasteinrichtung 38 hin verstellt, und zwar so weit, bis die Aufweitdorne 215, 216 und 217 durch die Durchgänge 115 im rotierend antreibbaren Trommelteil 46 hindurch mit ihren freien Enden mit den Angriffsstellen des vormontierten Klemmteiles 75 in Wirkverbindung stehen. In weiterer Folge werden dann mit Hilfe der dritten pneumatischen Verstelleinrichtung 219 und über den kegelstumpfförmigen Abschnitt 221 sowie die Kulissensteuerungen 222 die Halter 210, 211 und 212 und folglich die Aufweitdorne 215, 216 und 217 in radialen Richtungen nach außen verstellt, wodurch der vormontierte Klemmteil 75 aufgeweitet wird. Danach wird die zweite Bühne 208 von der Abtasteinrichtung 38 so weit weg verstellt, bis der zuvor aufgeweitete Klemmteil 75 sein Klemmniveau an dem hülsenförmigen Ansatz 73 erreicht hat. Danach wird die erste Bühne 203 etwas von der Abtasteinrichtung 38 weg verstellt, so daß die Niederhalter 206 und 207 außer Funktion kommen, und danach wird der Zentrierstempel 196 angehoben, so daß dieser den Träger 195 freigibt, und durch die Kanäle 194 ein Luftstrom in die Aufnahmewanne 192 eingebracht, wodurch der Träger 195 auf einem Luftfilm gleitet. Auf diese Weise kann sich der Träger 195 und die Abtasteinrichtung 38 mit ihrem Ansatz 73 praktisch kräftefrei an die Position des mit den Aufweitdornen 215, 216, 217 aufgeweitet gehaltenen Klemmteiles 75 anpassen. Danach wird mittels der dritten pneumatischen Verstelleinrichtung 219 der kegelstumpfförmige Abschnitt 221 wieder in Richtung zur Abtasteinrichtung 38 hin verstellt, was zur Folge hat, daß die Aufweitdorne 215, 216 und 217 durch die Kraftwirkung des Klemmteiles 75 in radialen Richtungen nach innen verstellt werden, wobei dann der Klemmteil 75 auf dem hülsenförmigen Ansatz 73 zu sitzen kommt und folglich den hülsenförmigen Ansatz 73 an der Welle 53 festklemmt.

Danach wird die zweite Bühne 208 samt den Aufweitdornen 215, 216 und 217 von der Abtasteinrichtung 38 so weit weg verstellt, daß der zweite Klemmteil 74 in Richtung des Pfeiles 223 (siehe Fig. 10) mit Hilfe einer hier nicht dargestellten Vorrichtung zentrisch über die Abtasteinrichtung 38 gebracht werden kann und in dieser Position gehalten werden kann. Auch wird der Träger 195 wieder mit Hilfe des Zentrierstempels 196 festgehalten und die Niederhalter 206 und 207 in Funktion gesetzt. In weiterer Folge wird die zweite Bühne 208 wieder in Richtung zu der Abtasteinrichtung 38 hin verstellt, wobei dann die freien Enden der Aufweitdorne 215, 216 und 217 mit den Angriffsstellen des Klemmteiles 74 in Wirkverbindung treten. Sobald der Klemmteil 74 von den Aufweitdornen 215, 216 und 217 übernommen ist, werden die Aufweitdorne wieder in radialen Richtungen nach außen verstellt, wodurch der Klemmteil 74 aufgeweitet wird. Danach wird die zweite Bühne 208 in Richtung zur Abtasteinrichtung 38 hin verstellt, und zwar so weit, bis der Klemmteil 74 sein Klemmniveau am ersten hülsenförmigen Ansatz 72 des rotierend antreibbaren Trommelteiles 46 erreicht hat. Sobald dies der Fall ist, werden wieder die Niederhalter 206 und 207 außer Funktion gesetzt und wird wieder eine Luftfilmlagerung für den Träger 195 erzeugt und danach werden die Aufweitdorne 215, 216 und 217 von dem Abschnitt 221 zur Verstellung unter der Kraftwirkung des Klemmteiles 74 freigegeben, wobei dann der Klemmteil 74 an dem ersten hülsenförmigen Ansatz 72 zum Sitzen kommt und auf diese Weise auch den ersten hülsenförmigen Ansatz 72 an der Welle 53 festklemmt. Danach werden die zweite Bühne 208 und die erste Bühne 203 von der Abtasteinrichtung 38 weg verstellt und der Zentrierdorn 196 außer Funktion gesetzt, wonach der Träger 195 samt der Abtasteinrichtung 38 aus der Aufweitvorrichtung 190 entnommen wird.

Bei allen vorstehend beschriebenen Ausführungsvarianten werden die nachfolgend angeführten Vorteile erhalten. Beim Festklemmen jedes der beiden hülsenförmigen Ansätze der Nabe des rotierend antreibbaren Trommelteiles an der Welle der Abtasteinrichtung wird der rotierend antreibbare Trommelteil zu seiner Positionierung beim Festklemmen auf einem Luftfilm schwimmend gehalten und daher nur mit ganz geringen Kräften positioniert, so daß beim Festklemmen praktisch überhaupt keine äußeren Kräfte auf den rotierend antreibbaren Trommelteil einwirken. Beim Festklemmen jedes Klemmteiles werden äußere Reaktionskräfte nur von der Aufweitvorrichtung aufgenommen. Aufgrund dieses Sachverhaltes wird eine einwandfreie und besonders exakte Klemmung mit einem minimalen Axialschlag und mit einem minimalen Radialschlag erreicht. Weiters ist vorteilhafterweise erreicht, daß die beiden Klemmteile ohne jeglichen mechanischen Kontakt zu dem betreffenden hülsenförmigen Ansatz in ihren Klemmniveaubereich auf dem jeweiligen hülsenförmigen Ansatz bringbar sind und danach die Klemmteile mit ihren Klemmfortsätzen exakt in radialen Richtungen zum jeweiligen hülsenförmigen Ansatz verstellbar sind, so daß keine undefinierten Reibungskräfte zwischen den freien Enden der Klemmfortsätze und dem betreffenden hülsenförmigen Ansatz auftreten, wodurch stets genau definierte, untereinander gleich große und stets reproduzierbare Klemmkräfte erzielt werden. Weiters ist hiebei durch die niveaugleiche Ausbildung der Klemmteile und ihrer Klemmfortsätze und die Verstellbarkeit der Klemmfortsätze exakt in radialen Richtungen erreicht, daß die von den Klemmteilen aufgebrachten Klemmkräfte nur exakt in radialen Richtungen wirken und keine Kraftkomponenten in axialen Richtungen auftreten, so daß der rotierend antreibbare Trommelteil auch über eine lange Lebensdauer keine Tendenz zum Wandern in axialer Richtung entlang der Welle aufweist. Vorteilhaft ist hiebei weiters, daß zum Festklemmen jedes Ansatzes an der Welle nur ein einziger Klemmteil erforderlich ist. Ein weiterer Vorteil besteht darin, daß das Festklemmen mit jeweils nur einem Klemmteil pro Ansatz sehr leicht und einfach in einem mechanisierten Vorgang durchgeführt werden kann.

Bei der vorstehend beschriebenen Ausführungsvariante gemäß den Figuren 1 bis 5 weist der rotierend antreibbare Trommelteil eines Videorecorders zwei in entgegengesetzten Axialrichtungen von einem Zentralbereich abstehende hülsenförmige Ansätze auf, an denen je ein Klemmteil angreift. Ein solcher rotierend antreibbarer Trommelteil kann aber auch eine Ausbildung aufweisen, bei der nur ein einziger hülsenförmiger Ansatz vorgesehen ist, an dem vorzugsweise zwei in axialer Richtung mit Abstand angeordnete Klemmteile angreifen. Es kann aber bei einem solchen rotierend antreibbaren Trommelteil mit nur einem hülsenförmigen Ansatz das Festklemmen dieses Ansatzes an der Welle auch mit nur einem einzigen Klemmteil erfolgen.

Die Erfindung ist vorstehend anhand eines Schrägspurmagnetbandrecorders beschrieben. Bei einer solchen Einrichtung haben sich die erfindungsgemäßen Maßnahmen zum Festklemmen des die rotierend antreibbaren Magnetköpfe tragenden Trommelteiles an der Welle der trommelförmigen Abtasteinrichtung eines solchen Schrägspurmagnetbandrecorders als besonders zweckmäßig und vorteilhaft erwiesen. Die erfindungsgemäßen Maßnahmen sind aber nicht nur in solchen Einrichtungen, wie Schrägspurmagnetbandrecordern, mit Vorteil einsetzbar, sondern auch in anderen Einrichtungen, bei denen ein äußerst präzises Festklemmen eines Bauteiles an einer Welle erforderlich ist.

## Patentansprüche

1. Einrichtung (1) mit einer Welle (53) und mit einem Bauteil (46), der eine Nabe (57) aufweist, die auf der Welle (53) sitzt und die mindestens einen koaxial zur Welle (53) verlaufenden hülsenförmigen Ansatz (72, 73) aufweist, der in radialen Richtungen elastisch deformierbar ausgebildet ist und an dem zum Festklemmen an der Welle (53) mindestens ein auf denselben aufsetzbarer, denselben ringartig umgebender, lösbarer Klemmteil (74, 75; 116; 136; 150; 167) angreift, der drei gleichmäßig um 120° zueinander winkelversetzt angeordnete, nach innen weisende Klemmstellen (88, 89, 90, 91, 92, 93; 123, 124, 125; 137, 138, 139; 157, 158, 159; 171, 172, 173) aufweist, von denen jede in radialer Richtung verstellbar ist, dadurch gekennzeichent, daß der Klemmteil (74,75; 116; 136; 150; 167) und seine drei Klemmstellen (88, 89, 90, 91, 92, 93; 123, 124, 125; 137, 138, 139; 157, 158, 159; 171, 172, 173) auf demselben senkrecht zur Welle (53) verlaufenden Niveau liegen und daß der Klemmteil (74, 75; 116; 136; 150; 167) in radialen Richtungen elastisch deformierbar ausgebildet ist und zusätzlich drei ebenfalls gleichmäßig um 120° zueinander winkelversetzt angeordnete, je in radialer Richtung verstellbare Angriffsstellen (95, 96, 97, 98, 99, 100; 126, 127, 128; 140, 141, 142; 160, 161, 162; 171, 172, 173) für eine Aufweitvorrichtung (190) aufweist, wobei je eine Angriffsstelle (95, 96, 97, 98, 99, 100; 126, 127, 128; 140, 141, 142; 160, 161, 162; 171, 172, 173) und mindestens eine Klemmstelle (88, 89, 90, 91, 92, 93; 123, 124, 125; 137, 138, 139; 157, 158, 159; 171, 172, 173) einander zugeordnet sind.

2. Einrichtung (1) nach Anspruch 1, dadurch gekennzeichnet, daß die Nabe (57) des Bauteiles (46) einen im wesentlichen undeformierbaren Zentralbereich (71) aufweist, von dem in entgegengesetzten Axialrichtungen zwei koaxial zur Welle (53) verlaufende hülsenförmige Ansätze (72, 73) abstehen, an denen je ein Klemmteil (74, 75) angreift, und daß jeder der beiden Klemmteile (74, 75) drei gleichmäßig um 120° zueinander winkelversetzt angeordnete, auf demselben Niveau wie der Klemmteil (74, 75) liegende Klemmstellen (89, 90, 91, 92, 93, 94) und drei ebenfalls gleichmäßig um 120° zueinander winkelversetzt angeordnete Angriffsstellen (95, 96, 97, 98, 99, 100) für eine Aufweitvorrichtung (190) aufweist (Fig. 3, 4, 5)

3. Einrichtung (1) nach Anspruch 2, dadurch gekennzeichnet, daß die beiden Klemmteile (74, 75) zur Aufbringung von unterschiedlich großen Klemmkräften ausgebildet sind (Fig. 3, 4, 5).

4. Einrichtung (1) nach Anspruch 3, dadurch gekennzeichnet, daß ein Klemmteil aus Federstahl und der andere Klemmteil aus Federbronze besteht.

5. Einrichtung (1) nach einem der Ansprüche 2 bis 4, dadurch gekennzeichnet, daß der Bauteil (46) drei gleichmäßig um 120° zueinander winkelversetzt angeordnete, den Bauteil (46) in axialer Richtung durchsetzende Durchgänge (115) aufweist und daß mit den drei Angriffsstellen (98, 99, 100) eines Klemmteiles (75) der Einrichtung drei Aufweitdorne (215, 216, 217) einer Aufweitvorrichtung (190) durch die drei Durchgänge (115) hindurch in Wirkverbindung bringbar sind. (Fig. 11)

6. Klemmteil (74, 75; 116; 136; 150; 167) für eine Einrichtung nach einem der Ansprüche 1 bis 5, der bezüglich einer Symmetrieachse (94) ringartig ausgebildet ist und der drei gleichmäßig um 120° zueinander winkelversetzt angeordnete, nach innen weisende Klemmstellen (88, 89, 90, 91, 92, 93; 123, 124, 125; 137, 138, 139; 157, 158, 159; 171, 172, 173) aufweist, von denen jede in radialer Richtung verstellbar ist, dadurch gekennzeichnet, daß der Klemmteil (74, 75; 116; 136; 150; 167) und seine drei Klemmstellen (88, 89, 90, 91, 92, 93; 123, 124, 125; 137, 138, 139; 157, 158, 159; 171, 172, 173) auf demselben senkrecht zur Symmetrieachse (94) verlaufenden Niveau liegen und daß der Klemmteil (74, 75; 116; 136; 150; 167) in radialen Richtungen elastisch deformierbar ausgebildet ist und zusätzlich drei ebenfalls gleichmäßig um 120° zueinander winkelversetzt angeordnete, je in radialer Richtung verstellbare Angriffsstellen (95, 96, 97, 98, 99, 100; 126, 127, 128; 140, 141, 142; 160, 161, 162; 171, 172, 173) für eine Aufweitvorrichtung (190) aufweist, wobei je eine Angriffsstelle (95, 96, 97, 98, 99, 100; 126, 127, 128; 140, 141, 142; 160, 161, 162; 171, 172, 173) und mindestens eine Klemmstelle (88, 89, 90, 91, 92, 93; 123, 124, 125; 137, 138, 139; 157, 158, 159; 171, 172, 173) einander zugeordnet sind (Fig. 4, 5; 6; 7; 8; 9).

7. Klemmteil (74, 75; 116; 136; 150) nach Anspruch 6, dadurch gekennzeichnet, daß jeweils eine Angriffsstelle (95, 96, 97, 98, 99, 100; 126, 127, 128; 140, 141, 142; 160, 161, 162) und eine ihr zugeordnete Klemmstelle (88, 89, 90, 91, 92, 93; 123, 124, 125; 137, 138, 139; 157, 158, 159) auf einer Radiuslinie (101, 102, 103, 104, 105, 106; 129, 130, 131; 143, 144, 145; 163, 164, 165) liegen, so daß jeweils eine Angriffsstelle (95, 96, 97, 98, 99, 100; 126, 127, 128; 140, 141, 142; 160, 161, 162), und die ihr zugeordnete Klemmstelle (88, 89, 90, 91, 92, 93; 123, 124, 125; 137, 138, 139; 157, 158, 159) gleichsinnig mit Hilfe einer Aufweitvorrichtung (190) verstellbar sind (Fig. 4, 5; 6; 7; 8).

8. Klemmteil (74, 75; 116; 136; 150) nach Anspruch 7, dadurch gekennzeichnet, daß der Klemmteil (74, 75; 116; 136; 150) in seinen drei Bereichen (76m, 77m, 78m, 79m, 80m, 81m; 120, 121, 122; 151, 152, 153) mit je einer Angriffsstelle (95, 96, 97, 98, 99, 100; 126, 127, 128; 140, 141, 142; 160, 161, 162) und der dieser Angriffsstelle zugeordnete Klemmstelle (88, 89, 90, 91, 92, 93; 123, 124, 125; 137, 138, 139; 157, 158, 159) in radialen Richtungen im wesentlichen undeformierbar und in den zwischen diesen drei Bereichen liegenden Abschnitten (76", 82, 77', 77", 83, 78', 78", 84, 76', 79", 85, 80', 80", 86, 81', 81", 87, 79'; 117, 118, 119; 154, 155, 156) in radialen Richtungen elastisch deformierbar ausgebildet ist (Fig. 4, 5; 6; 7).

9. Klemmteil (74, 75; 116; 136) nach Anspruch 8, dadurch gekennzeichnet, daß von jeder Angriffsstelle (95, 96, 97, 98, 99, 100; 126, 127, 128; 140, 141, 142) im Klemmteil (74, 75; 116; 136) ein in radialer Richtung verlaufender, den Klemmteil (74, 75; 116; 136) in axialer Richtung durchsetzender Schlitz (107, 108, 109, 110; 111, 112; 132, 133, 134; 146, 147, 148) bis zur außeren Begrenzungswand (113, 114; 135; 149) des Klemmteiles (74, 75; 116; 136) führt (Fig. 4, 5; 6; 7).

10. Klemmteil (74, 75; 116; 150) nach einem der Ansprüche 7 bis 9, dadurch gekennzeichnet, daß jede Angriffsstelle (95, 96, 97, 98, 99, 100; 126, 127, 128; 160, 161, 162) durch die Begrenzungswand eines den Klemmteil (74, 75; 116, 150) in axialer Richtung durchsetzenden Loches gebildet ist (Fig. 4, 5; 6; 8).

11. Klemmteil (167) nach Anspruch 6, dadurch gekennzeichnet, daß jeweils eine Angriffsstelle (178, 179, 180) und je eine von zwei ihr zugeordneten Klemmstellen (171, 172, 173) auf zwei Radiuslinien (181, 182, 183, 184, 185, 186) liegen, die einen Winkel von 60° miteinander einschließen, wobei jeweils eine Angriffsstelle (178, 179, 180) und die beiden ihr zugeordneten Klemmstellen (171, 172, 173) gegensinnig mit Hilfe einer Aufweitvorrichtung (187, 188, 189) verstellbar sind (Fig. 9).

12. Klemmteil (167) nach Anspruch 11, dadurch gekennzeichnet, daß der Klemmteil (167) in seinen drei Bereichen (168, 169, 170) mit je einer Klemmstelle (171, 172, 173) in radialen Richtungen im wesentlichen undeformierbar ausgebildet ist und zwischen diesen drei Bereichen (168, 169, 170) je einen in radialen Richtungen elastisch deformierbaren Abschnitt (174, 175, 176) mit einer Doppelhöckerform aufweist, dessen beide Höcker von der Symmetrieachse (94) des Klemmteiles (167) weg weisen und dessen Mittenbereich zwischen den beiden Höckern zu der Symmetrieachse (94) hin weist, und daß die äußere Begrenzungswand (177) des Klemmteiles (167) je im Mittenbereich zwischen den beiden Höckern des in radialen Richtungen elastisch deformierbaren Abschnittes (174, 175, 176) eine Angriffsstelle (178, 179, 180) für eine Aufweitvorrichtung (187, 188, 189) bildet (Fig. 9).

13. Aufweitvorrichtung (190) zum Verstellen der Angriffsstellen (95, 96, 97, 98, 99, 100; 126, 127, 128; 140, 141, 142; 168, 161, 162) eines Klemmteiles (74,75; 116, 136; 150) nach einem der Ansprüche 6 bis 12 einer Einrichtung (1) nach einem der Ansprüche 1 bis 5, dadurch gekennzeichnet, daß die Aufweitvorrichtung (190) drei bezüglich einer Symmetrieachse (197), die mit der Achse (198) der Welle (53), auf der die Nabe (57) des Bauteiles (46) der Einrichtung (1) sitzt, zum Fluchten bringbar ist, gleichmäßig um 120° zueinander winkelversetzt angeordnete Aufweitdorne (215, 216, 217) und eine Verstelleinrichtung (221) für die Aufweitdorne (215, 216, 217) aufweist, mit der jeder der drei Aufweitdorne (215, 216, 217) zumindest mit einem freinen Ende, das zum Zusammenwirken mit einer Angriffsstelle (95, 96, 97, 98, 99, 100; 126, 127, 128; 140, 141, 142; 160, 161, 162) eines Klemmteiles (74, 75; 116; 136; 150) der Einrichtung (1) vorgesehen ist, in einer radialen Richtung bezüglich der Symmetrieachse (197) verstellbar ist.

14. Aufweitvorrichtung (190) nach Anspruch 13, dadurch gekennzeichnet, daß jeder Aufweitdorn (215, 216, 217) an einem Halter (210, 211, 212) gehalten ist, der an einem Halterträger (208) der Aufweitvorrichtung (190) in einer radialen Richtung bezüglich der Symmetrieachse (197) verstellbar gelagert ist (Fig. 10, 11).

15. Aufweitvorrichtung (190) nach Anspruch 14, dadurch gekennzeichnet, daß der Halterträger (208) in Richtung der Symmetrieachse (197) verstellbar geführt ist (Fig. 10, 11).

16. Aufweitvorrichtung (190) nach Anspruch 15, dadurch gekennzeichnet, daß zwischen jedem am Halterträger (208) verstellbar gelagerten Halter (210, 211, 212) und einer gegenüber dem Halterträger (208) in Richtung der Symmetrieachse (197) verstellbaren Verstelleinrichtung (221) der Aufweitvorrichtung (190) eine Kulissensteuerung (222) vorgesehen ist, über die bei einer Verstellung der Verstelleinrichtung (221) in Richtung der Symmetrieachse (197) die Halter (210, 211, 212) und die daran gehaltenen Aufweitdorne (215, 216, 217) mit zumindest deren freien Enden je in einer radialen Richtung bezüglich der Symmetrieachse (197) verstellbar sind (Fig. 10, 11).

## Claims

1. An arrangement (1) comprising a shaft (53) and a part (46) having a hub (57) mounted on the shaft (53) and comprising at least one tubular portion (72, 73) which is coaxial with the shaft (53) and is constructed to be elastically deformable in radial directions, which tubular portion is acted upon by at least one releasible clamping member (74, 75; 116; 136; 150; 167) in order to be clamped onto the shaft (53), which clamping member can be mounted on said tubular member and surrounds it in a ring-like manner and comprises three inwardly directed clamping zones (88, 89, 90, 91, 92, 93; 123, 124, 125; 137, 138, 139; 157, 158, 159; 171, 172, 173) which are equispaced at angles of 120° from one another and are each movable in a radial direction, characterized in that the clamping member (74, 75; 116; 136; 150; 167) and its three clamping zones (88, 89, 90, 91, 92, 93; 123, 124, 125; 137, 138, 139; 157, 158, 159; 171, 172, 173) are situated at the same level perpendicular to the shaft (53), and the clamping member (74, 75; 116; 136; 150; 167) is constructed to be elastically deformable in radial directions and in addition comprises three application zones (95, 96, 97, 98, 99, 100; 126, 127, 128; 140, 141, 142; 160, 161, 162; 171, 172, 173) for an expansion device (190), which application zones are also equispaced at angles of 120° from one another and are each movable in a radial direction, each application zone (95, 96, 97, 98, 99, 100; 126, 127, 128; 140, 141, 142; 160, 161, 162; 171, 172, 173) and at least one clamping zone (88, 89, 90, 91, 92, 93; 123, 124, 125; 137, 138, 139; 157, 158, 159; 171, 172, 173) being associated with one another.

2. An arrangement (1) as claimed in Claim 1, characterized in that the hub (57) of the part (46) comprises a substantially non-deformable central portion (71) from which two tubular portions (72, 73), which are coaxial with the shaft (53), project in opposite axial directions, a clamping member (74, 75) acting upon each annular portion, and each of the two clamping members (74, 75) having three clamping zones (89, 90, 91, 92, 93, 94) which are equispaced at angles of 120° from one another and which are situated at the same level as the clamping member (74, 75), and three application zones (95, 96, 97, 98, 99, 100) for an expansion device (190), which application zones are also equispaced at angles of 120° from one another (Figs. 3, 4, 5).

3. An arrangement (1) as claimed in Claim 2, characterized in that the two clamping members (74, 75) are constructed to apply clamping forces of different magnitude (Figs. 3, 4, 5).

4. An arrangement (1) as claimed in Claim 3, characterized in that one clamping member is made of spring steel and the other clamping member is made of spring bronze.

5. An arrangement (1) as claimed in any one of the Claims 2 to 4, characterized in that the part (46) has three passages (115) which traverse the part (46) in the axial direction and which are equispaced at angles of 120° from one another, and three expansion mandrils (215, 216, 217) of an expansion device (190) are adapted to cooperate with the three application zones (98, 99, 100) of a clamping member (75) of the arrangement through the three passages (115) (Fig. 11).

6. A clamping member (74, 75; 116; 136; 150; 167) for an arrangement as claimed in any one of the Claims 1 to 5, which is of a ring-like construction in relation to an axis of symmetry (94) and which comprises three inwardly directed clamping zones (88, 89, 90, 91, 92, 93; 123, 124, 125; 137, 138, 139; 157, 158, 159; 171, 172, 173) which are equispaced at angles of 120° from one another and are each movable in a radial direction, characterized in that the clamping member (74, 75; 116; 136; 150; 167) and its three clamping zones (88, 89, 90, 91, 92, 93; 123, 124, 125; 137, 138, 139; 157, 158, 159; 171, 172, 173) are situated at the same level perpendicular to the axis of symmetry (94), and the clamping member (74, 75; 116; 136; 150; 167) is constructed to be elastically deformable in radial directions and in addition comprises three application zones (95, 96, 97, 98, 99, 100; 126, 127, 128; 140, 141, 142; 160, 161, 162; 171, 172, 173) for an expansion device (190), which application zones are also equispaced at angles of 120° from one another and are each movable in a radial direction, each application zone (95, 96, 97, 98, 99, 100; 126, 127, 128; 140, 141, 142; 160, 161, 162; 171, 172, 173) and at least one clamping zone (88, 89, 90, 91, 92, 93; 123, 124, 125; 137, 138, 139; 157, 158, 159; 171, 172, 173) being associated with one another (Figs. 4, 5; 6; 7; 8; 9).

7. A clamping member (74, 75; 116; 136; 150) as claimed in Claim 6, characterized in that each application zone (95, 96, 97, 98, 99, 100; 126, 127, 128; 140, 141, 142; 160, 161, 162) and its associated clamping zone (88, 89, 90, 91, 92, 93; 123, 124, 125; 137, 138, 139; 157, 158, 159) are situated on a radial line (101, 102, 103, 104, 105, 106; 129, 130, 131; 143, 144, 145; 163, 164, 165), so that each application zone (95, 96, 97, 98, 99, 100; 126, 127, 128; 140, 141, 142; 160, 161, 162) and its associated clamping zone (88, 89, 90, 91, 92, 93; 123, 124, 125; 137, 138, 139; 157, 158, 159) can be moved in the same direction by means of an expansion device (190) (Figs. 4, 5; 6; 7; 8).

8. A clamping member (74, 75; 116; 136; 150) as claimed in Claim 7, characterized in that the clamping member (74, 75; 116; 136; 150) is substantially non-deformable in radial directions in its three areas (76m, 77m, 78m, 79m, 80m, 81m; 120, 121, 122; 151, 152, 153) which each have an application zone (95, 96, 97, 98, 99, 100; 126, 127, 128; 140, 141, 142; 160, 161, 162) and a clamping zone (88, 89, 90, 91, 92, 93; 123, 124, 125; 137, 138, 139; 157, 158, 159) associated with said application zone, and is elastically deformable in radial directions in the parts (76", 82, 77', 77", 83, 78', 78", 84, 76', 79", 85, 80', 80", 86, 81', 81", 87, 79'; 117, 118, 119; 154, 155, 156) situated between the said three areas (Figs. 4, 5; 6; 7).

9. A clamping member (74, 75; 116; 136) as claimed in Claim 8, characterized in that a radial slot (107, 108, 109, 110, 111, 112; 132, 133, 134; 146; 147; 148), which traverses the clamping member (74, 75; 116; 136) in the axial direction, extends from each application zone (95, 96, 97, 98, 99, 100; 126, 127, 128; 140, 141, 142) in the clamping member (74, 75; 116; 136) up to the outer bounding wall (113, 114; 135; 149) of the clamping member (74, 75; 116; 136) (Figs. 4, 5; 6; 7).

10. A clamping member (74, 75; 116; 150) as claimed in any one of the Claims 7 to 9, characterized in that each application zone (95, 96, 97, 98, 99, 100; 126, 127, 128; 140, 141, 142; 160, 161, 162) is formed by the bounding wall of a hole traversing the clamping member (74, 75; 116; 150) in the axial direction (Figs. 4, 5; 6; 8).

11. A clamping member (167) as claimed in Claim 6, characterized in that one application zone (178, 179, 180) and one of the two associated clamping zones (171, 172, 173) are situated on two radial lines (181, 182, 183, 184, 185, 186) which enclose an angle of 60° with one another, each application zone (178, 179, 180) and the two clamping zones (171, 172, 173) associated therewith being movable in opposite directions by means of an expansion device (187, 188, 189) (Fig. 9).

12. A clamping member (167) as claimed in Claim 11, characterized in that the clamping member (167) is substantially non-deformable in radial directions in its three areas (168, 169, 170) having one clamping zone (171, 172, 173) each and has portions (174, 175, 176) which are elastically deformable in radial directions between said three areas (168, 169, 170) and which are shaped as two bulges directed away from the axis of symmetry (94) of the clamping member (167) and having between the two bulges a dale directed towards the axis of symmetry (94), and the outer bounding wall (177) of the clamping member (167) forms an application zone (178, 179, 180) for an expansion device (187, 188, 189) in the dale between the two bulges of each of the portions (174, 175, 176) which are elastically deformable in radial directions (Fig. 9).

13. An expansion device (190) for moving the application zones (95, 96, 97, 98, 99, 100; 126, 127, 128; 140, 141, 142; 160, 161, 162) of a clamping member (74, 75; 116, 136; 150) as claimed in any one of the Claims 6 to 12 of an arrangement (1) as claimed in any one of the Claims 1 to 5, characterized in that the expansion device (190) comprises three expansion mandrils (215, 216, 217), which are equispaced at angles of 120° from one another with respect to an axis of symmetry (197), which can be aligned with the axis (198) of the shaft (53) carrying the hub (57) of the part (46) of the arrangement (1), and an actuating device (221) for the expansion mandrils (215, 216, 217), by means of which actuating device each of the three expansion mandrils (215, 216, 217) is movable in a radial direction relative to the axis of symmetry (197) at least with a free end which is adapted to cooperate with an application zone (95, 96, 97, 98, 99, 100; 126, 127, 128; 140, 141, 142; 160, 161, 162) of a clamping member (74, 75; 116, 136; 150) of the arrangement (1).

14. An expansion device (190) as claimed in Claim 13, characterized in that each expansion mandril (215, 216, 217) is secured to a holder (210, 211, 212) which is arranged on a holder mount (208) of the expansion device (190) so as to be movable in a radial direction relative to the axis of symmetry (197) (Figs. 10, 11).

15. An expansion device (190) as claimed in Claim 14, characterized in that the holder mount (208) is guided so as to be movable in the direction of the axis of symmetry (197) (Figs. 10, 11).

16. An expansion device (190) as claimed in Claim 15, characterized in that a link motion (222) is arranged between each holder (210, 211 and 212), which is movably connected to the holder mount (208), and an actuating device (221) of the expansion device (190), which actuating device is movable relative to the holder mount (208) in the direction of the axis of symmetry (197), which link motion enables the holders (210, 211, 212) and at least the free ends of the expansion mandrils (215, 216, 217) secured to said holders to be moved in a radial direction relative to the axis of symmetry (197) when the actuating device (221) is moved in the direction of the axis of symmetry (197) (Figs. 10, 11).

## Revendications

1. Dispositif (1) avec un arbre (53) et avec une pièce (46) qui présente un moyeu (57) qui est logé sur l'arbre (53) et qui présente au moins un épaulement (72, 73) en forme de douille s'étendant coaxialement à l'arbre (53), lequel épaulement est conçu de manière élastiquement déformable en direction radiale et sur lequel est appliquée en vue du serrage à bloc sur l'arbre (53) au moins une pièce de serrage (74, 75; 116; 136; 150; 167) amovible qui peut être appliquée sur celui-ci et entoure celui-ci en forme d'anneau, laquelle pièce présente trois points de serrage (88, 89, 90, 91, 92, 93; 123, 124, 125; 137, 138, 139; 157, 158, 159; 171, 172, 173) tournés vers l'intérieur et disposés dans un décalage angulaire réciproque régulier de 120° dont chacun est déplaçable en direction radiale, caractérisé en ce que la pièce de serrage (74, 75; 116; 136; 150; 167) et ses trois points de serrage (88, 89, 90, 91, 92, 93; 123, 124, 125; 137, 138, 139; 157, 158, 159; 171, 172, 173) sont situés sur le même niveau s'étendant perpendiculairement à l'arbre (53) et que la pièce de serrage (74, 75; 116; 136; 150; 167) est conçue de manière élastiquement déformable en direction radiale et présente par ailleurs trois points d'application (95, 96, 97, 98, 99, 100; 126, 127, 128; 140, 141, 142; 160, 161, 162; 171, 172, 173) pour un dispositif d'élargissement (190) réglables respectivement en direction radiale et disposés dans un décalage angulaire réciproque régulier de 120°, chaque point d'application (95, 96, 97, 98, 99, 100; 126, 127, 128; 140, 141, 142; 160, 161, 162; 171, 172, 173) et au moins un point de serrage (88, 89, 90, 91, 92, 93; 123, 124, 125; 137, 138, 139; 157, 158, 159; 171, 172, 173) étant affectés l'un à l'autre.

2. Dispositif (1) selon la revendication 1, caractérisé en ce que le moyeu (57) de la pièce (46) présente une zone centrale (71) essentiellement indéformable dont débordent en directions radiales opposées deux épaulements (72, 73) en forme de douille s'étendant coaxialement à l'arbre (53), épaulements sur lesquels est respectivement appliquée une pièce de serrage (74, 75) et que chacune des deux pièces de serrage (74, 75) présente trois points de serrage (89, 90, 91, 92, 93, 94) disposés dans un décalage angulaire réciproque régulier de 120° et appliqués sur le même niveau que la pièce de serrage (74, 75) et trois points d'application (95, 96, 97, 98, 99, 100) disposés également dans un décalage angulaire réciproque régulier de 120° pour un dispositif d'élargissement (190) (Fig. 3, 4, 5).

3. Dispositif (1) selon la revendication 2, caractérisé en ce que les deux pièces de serrage (74, 75) sont conçues pour l'application de forces de serrage de grandeur différente (Fig. 3, 4, 5)

4. Dispositif (1) selon la revendication 3, caractérisé en ce qu'une pièce de serrage se compose d'acier à ressort et l'autre pièce de serrage de bronze à ressort.

5. Dispositif (1) selon l'une des revendications 2 à 4, caractérisé en ce que la pièce (46) présente trois passages (115) traversant la pièce (46) en direction axiale et disposés dans un décalage angulaire réciproque régulier de 120° et que trois mandrins d'élargissement (215, 216, 217) d'un dispositif d'élargissement (190) peuvent être amenés en contact actif par les trois passages (115) avec les trois points d'application (98, 99, 100) d'une pièce de serrage (75) du dispositif (Fig. 11).

6. Pièce de serrage (74, 75; 116; 136; 150, 167) pour un dispositif selon l'une des revendications 1 à 5 qui est conçue en forme d'anneau par rapport à un axe de symétrie (94) et présente trois points de serrage (88, 89, 90, 91, 92, 93; 123, 124, 125; 137, 138, 139; 157, 158, 159; 171, 172, 173) tournés vers l'intérieur et disposés dans un décalage angulaire réciproque régulier de 120° dont chacun est déplaçable en direction radiale, caractérisée en ce que la pièce de serrage (74, 75; 116; 136; 150; 167) et ses trois points de serrage (88, 89, 90, 91, 92, 93; 123, 124, 125; 137, 138, 139; 157, 158, 159; 171, 172, 173) sont appliqués sur le même niveau s'étendant perpendiculairement à l'axe de symétrie (94) et que la pièce de serrage (74, 75; 116; 136, 150; 167) est conçue de manière élastiquement déformable en direction radiale et présente par ailleurs trois points d'application (95, 96, 97, 98, 99, 100; 126, 127, 128; 140, 141, 142; 160, 161, 162; 171, 172, 173) déplaçables respectivement en direction radiale et disposés dans un décalage angulaire réciproque régulier de 120° pour un dispositif d'élargissement (190), un point d'application (95, 96, 97, 98, 99, 100; 126, 127, 128; 140, 141, 142; 160, 161, 162; 171, 172, 173) et au moins un point de serrage (88, 89, 90, 91, 92, 93; 123, 124, 125; 137, 138, 139; 157, 158, 159; 171, 172, 173) étant affectés l'un à l'autre (Fig. 4, 5; 6; 7; 8; 9)

7. Pièce de serrage (74, 75; 116; 136; 150) selon la revendication 6, caractérisée en ce qu'un point d'application (95, 96, 97, 98, 99, 100; 126, 127, 128; 140, 141, 142; 160, 161, 162) et un point de serrage qui lui est affecté (88, 89, 90, 91, 92, 93; 123, 124, 125; 137, 138, 139; 157, 158, 159) sont situés respectivement sur une ligne de rayon (101, 102, 103, 104, 105, 106; 129, 130, 131; 143, 144, 145; 163, 164, 165) de telle sorte qu'un point d'application (95, 96, 97, 98, 99, 100; 126, 127, 128; 140, 141, 142; 160, 161, 162) et le point de serrage (88, 89, 90, 91, 92, 93; 123, 124, 125; 137, 138, 139; 157, 158, 159) qui lui est respectivement affecté soient déplaçables dans le même sens à l'aide d'un dispositif d'élargissement (190) (Fig. 4, 5; 6; 7; 8).

8. Pièce de serrage (74, 75; 116; 136; 150) selon la revendication 7, caractérisée en ce que la pièce de serrage (74, 75; 116; 136; 150) est de conception essentiellement indéformable en direction radiale dans ses trois zones (76m, 77m, 78m, 79m, 80m, 81m; 120, 121, 122; 151, 152, 153) avec respectivement un point d'application (95, 96, 97, 98, 99, 100; 126, 127, 128; 140, 141, 142; 160, 161, 162) et la pièce de serrage (88, 89, 90, 91, 92, 93; 123, 124, 125; 137, 138, 139; 157, 158, 159) qui lui est respectivement affectée est de conception élastiquement déformable en direction radiale dans les segments (76", 82, 77', 77", 83, 78', 78", 84, 76', 79", 85, 80', 80", 86, 81', 81", 87, 79'; 117, 118, 119; 154, 155, 156) situés entre ces trois zones (Fig. 4, 5; 6; 7).

9. Pièce de serrage (74, 75; 116; 136) selon la revendication 8, caractérisée en ce qu'une fente (107, 108, 109, 110; 111, 112; 132, 133, 134; 146, 147, 148) s'étendant en direction radiale et traversant la pièce de serrage (74, 75; 116; 136) en direction axiale s'étend depuis chaque point d'application (95, 96, 97, 98, 99, 100; 126, 127, 128; 140, 141, 142) dans la pièce de serrage (74, 75; 116; 136) jusqu'à la paroi de délimitation externe (113, 114; 135; 149) de la pièce de serrage (74, 75; 116; 136) (Fig. 4, 5; 6; 7).

10. Pièce de serrage (74, 75; 116; 150) selon l'une des revendications 7 à 9, caractérisée en ce chaque point d'application (95, 96, 97, 98, 99, 100; 126, 127, 128; 160, 161, 162) est formé par la paroi de délimitation d'un orifice traversant la pièce de serrage (74, 75; 116, 150) en direction axiale (Fig. 4, 5; 6; 8).

11. Pièce de serrage (167) selon la revendication 6, caractérisée en ce qu'un point d'application (178, 179, 180) et respectivement un des deux points de serrage (171, 172, 173) qui lui sont affectés se situent sur deux lignes de rayon (181, 182, 183, 184, 185, 186) qui forment un angle de 60° entre elles, un point d'application (178, 179, 180) et les deux points de serrage (171, 172, 173) qui lui sont affectés étant déplaçables dans le sens contraire à l'aide d'un dispositif d'élargissement (187, 188, 189) (Fig. 9).

12. Pièce de serrage (167) selon la revendication 11, caractérisée en ce que la pièce de serrage (167) est conçue de manière essentiellement indéformable dans ses trois zones (168, 169, 170) avec respectivement un point de serrage (171, 172, 173) en direction radiale et entre ces trois zones (168, 169, 170) présente un segment élastiquement déformable (174, 175, 176) en direction radiale avec une forme de double bosse dont les deux bosses s'écartent de l'axe de symétrie (94) de la pièce de serrage (167) et dont la zone centrale entre les deux bosses est tournée vers l'axe de symétrie (94) et que la paroi de délimitation externe (177) de la pièce de serrage (167) forme respectivement dans la zone centrale entre les deux bosses du segment (174, 175, 176) déformable élastiquement en direction radiale un point d'application (178, 179, 180) pour un dispositif d'élargissement (187, 188, 189) (Fig. 9).

13. ispositif d'élargissement (190) en vue du déplacement des points d'application (95, 96, 97, 98, 99, 100; 126, 127, 128; 140, 141, 142; 168, 161, 162) d'une pièce de serrage (74, 75; 116, 136; 150) selon l'une des revendications 6 à 12 d'un dispositif (1) selon l'une des revendications 1 à 5, caractérisé en ce que le dispositif d'élargissement (190) présente trois mandrins d'élargissement (215, 216, 217) disposés dans un décalage angulaire réciproque régulier de 120° par rapport à un axe de symétrie (197) qui peut être aligné avec l'axe (198) de l'arbre (53) sur lequel est logé le moyeu (57) de la pièce (46) du dispositif (1) et un dispositif de déplacement (221) pour les mandrins d'élargissement (215, 216, 217) avec lequel chacun des trois mandrins d'élargissement (215, 216, 217) est réglable dans une direction radiale par rapport à l'axe de symétrie (197) du moins avec une extrémité libre qui est prévue pour coopérer avec un point d'application (95, 96, 97, 98, 99, 100; 126, 127, 128; 140, 141, 142; 160, 161, 162) d'une pièce de serrage (74, 75; 116; 136; 150) du dispositif (1).

14. Dispositif d'élargissement (190) selon la revendication 13, caractérisé en ce que chaque mandrin d'élargissement (215, 216, 217) est maintenu sur un support (210, 211, 212) qui est logé à déplacement sur un porte-support (208) du dispositif d'élargissement (190) dans une direction radiale par rapport à l'axe de symétrie (197) (Fig. 10, 11).

15. Dispositif d'élargissement (190) selon la revendication 14, caractérisé en ce que le porte-support (208) est guidé à déplacement dans la direction de l'axe de symétrie (197) (Fig. 10, 11).

16. Dispositif d'élargissement (190) selon la revendication 15, caractérisé en ce qu'une commande à coulisse (222) par l'intermédiaire de laquelle les supports (210, 211, 212) et les mandrins d'élargissement (215, 216, 217) maintenus par ceux-ci sont déplaçables avec au moins leurs extrémités libres dans une direction radiale par rapport à l'axe de symétrie (197) en cas de déplacement du dispositif de déplacement (221) dans la direction de l'axe de symétrie (197) est prévue entre chaque support (210, 211, 212) logé à déplacement sur le porte-support (208) et un dispositif de déplacement (221) du dispositif d'élargissement (190) déplaçable par rapport au porte-support (208) dans la direction de l'axe de symétrie (197) (Fig. 10, 11).
